# EUROPEAN PATENT APPLICATION

(11) **EP 2 243 864 A1**
(43) Date of publication of application: **27.10.2010**
(21) Application number: 09708875.1
(22) Date of filing: 07.02.2009
(51) Int. Cl.: C23C 26/00, B23K 15/00, B23K 26/20, B30B 11/02

(54) **METHOD FOR TREATING TABLETING SURFACE OF PESTLE OR MORTAR FOR TABLETING TABLETS, PESTLE OR MORTAR THAT HAS BEEN SURFACE TREATED BY THE METHOD, AND TABLETS TABLETED BY THE PESTLE OR MORTAR**

(30) Priority: 08.02.2008 JP 2008029269; 04.02.2009 JP 2009023771
(71) Applicant: Sawaguchi, Kazuo, Tokushima 771-1222 (JP); LTT Bio-Pharma Co., Ltd., Minato-ku Tokyo 105-0022 (JP)
(72) Inventor: SAWAGUCHI, Kazuo, Itano-gun Tokushima 771-1222 (JP); SAWAGUCHI, Taku, Itano-gun Tokushima 771-1222 (JP)
(74) Representative: Hart-Davis, Jason
(86) International application number: PCT/JP2009/000491
(87) International publication number: WO 2009/098904

(57) **Abstract**

[Issue] Various metals can simply, easily, and efficiently form an alloy together with tableting surfaces of various base metal materials, and can reliably combine with the tableting surfaces.

[Means for Solution] A method for tableting surface treatment of a tableting punch or die includes provisional filming and beam irradiation steps. In the provisional filming step, a tableting surface of a base metal material 1 is subjected to shot peening using different type metal grains 2 made of a different type of metal for adhesion, or the different type metal grains 2 are adhered by a binder whereby forming a different type metal film 3 on the surface. In the beam irradiation step, after the different type metal film 3 is formed, the surface is irradiated with an electron beam 4 or laser beam as energy beam to combine the different type metal film 3 and the base metal material 1.

## Description

### Technical Field

The present invention related to a method for tableting surface treatment of a tableting punch or die, a punch or die subjected to the surface treatment by this method, and a tablet formed by using this tableting punch or die.

### Background Art

Tableting punches and dies are required to have durability and releasability. Some punches or dies have been developed to satisfy the requirements (See Patent Documents 1 to 4).

Patent Document 1 discloses, in order to form a tablet by compressing a corrosive material, a punch or die that is formed of metal such as Ti, Ti alloy, Ni-Cr-Mo group alloy, Ni-Mo group alloy and Co-based alloy, and is alternatively additionally coated with any of diamond-like C, Ti, titanium nitride, chromium nitride and Ti/Titanium nitride double coating on the surface of the punch or die whereby improving the corrosion resistance of the punch or die.

Patent Document 2 discloses a punch for forming a tablet containing an acidic substance or an adherent substance in that the tableting surface of the punch is coated with Cr-Dopé-N whereby obtaining excellent corrosion resistance and releasability.

Patent Document 3 discloses a punch or die that is formed of a sintered alloy having high mechanical properties and excellent corrosion resistance. The punch or die is formed of the sintered alloy that is obtained by conventionally sintering components containing 36% to 53% by weight of cobalt (Co), 27% to 35% by weight of chromium (Cr), 10% to 20% by weight of tungsten (W) and 2% to 3% by weight of carbon (C) with at least any of 0.2% to 5% by weight of tantalum (Ta) and niobium (Nb) added to the components. The sintered alloy can have excellent corrosion resistance.

Patent Document 4 discloses a punch or die that includes a high-silicon steel as a basis material the surface of which is additionally subjected to a carburization treatment whereby obtaining corrosion resistance and releasability.

The punches or dies disclosed in these Patent Documents are not enough in durability to form all types of powdery medicines, and are not enough in releasability to prevent adhesion of all types of powdery medicines to the punches or dies. For example, in the case of Patent Document 1 in that the punch or die is formed of Ti as a base metal, it is not possible to provide sufficient durability and releasability. Also in the case of the punch or die with a coating layer coated on the surface of the base metal, even if the coating layer improves durability and releasability, the coating layer will be peeled off when the punch or die is used. This may cause a problem of intrusion of metal of the coating layer into tablets. Also, the sintered metal disclosed in Patent Document 3 does not have sufficient impact resistance, and has a disadvantage of intrusion of broken pieces of the sintered metal into tablets. The carburized punch or die disclosed in Patent Document 4 does not have a disadvantage of intrusion of metal of the punch or die into tablets, but cannot have sufficient durability.
Patent Document 1: Japanese Patent Laid-Open Publication No. 2003-210553
Patent Document 2: Japanese Patent Laid-Open Publication No. 2001-71189
Patent Document 3: Japanese Laid-Open Patent Publication No. H11-158571
Patent Document 4: Japanese Patent Laid-Open Publication No. 2002-1593
Patent Document 5: Japanese Patent Laid-Open Publication No. 2006-315076

### Disclosure of Invention

### Problems to be Solved by the Invention

To solve the aforementioned disadvantages of the known punches or dies, the inventors have developed a treatment method of a tableting surface layer of a punch or die (see Patent Document 5).
In this method, the surface of a base metal is subjected to electric discharge processing using an electrode containing hardening metal so that a surface layer is formed such as chromium nitride, diamond-like C, titanium nitride, chromium-dopé-N, titanium carbide, hard chromium plating, and electroless nickel plating. This method successfully increases coating layer peeling-off duration by four to five times as compared with conventional coating layers. However, it cannot be said that even the punch or die produced by this surface treatment method has sufficient properties in all applications. Surface treatment is desired that has more excellent properties. In addition, in order to improve tablet releasability, tablets to be formed by conventional punch or die tableting are added with lubricants such as magnesium stearate. The lubricants are not necessary components required to medicines, and affect dissolution of the tablets inside patients' bodies after patients take the tablets. For this reason, tableting without lubricants is desired.
The present invention has been developed for solving the disadvantages. It is an important object of the present invention is to provide a tableting punch or die with more excellent durability and releasability. Means to Solve the Problems

A method for tableting surface treatment of a tableting punch or die according to a first aspect of the present invention includes a beam irradiation step and a beam irradiation step. In the provisional filming step, a tableting surface of a base metal material (1) is subjected to shot peening using different type metal grains (2) made of a different type of metal from the base metal material (1) so that a different type metal film (3) is formed on the tableting surface of the base metal material (1). In the beam irradiation step, after the different type metal film (3) is formed in the provisional filming step, the tableting surface of the base metal material (1) is irradiated with an electron beam (4) or laser beam as energy beam so that the different type metal film (3) and the base metal material (1) are combined to form a tableting surface layer (5).

A method for tableting surface treatment of a tableting punch or die according to a second aspect of the present invention includes a beam irradiation step and a beam irradiation step. In the provisional filming step, a tableting surface of a base metal material (1) is subjected to shot peening using different type metal grains (2) made of a different type of metal from the base metal material (1) so that a different type metal film (3) is formed on the tableting surface of the base metal material (1).
In the beam irradiation step, after the different type metal film (3) is formed in the provisional filming step, the tableting surface of the base metal material (1) is irradiated with an electron beam (4) or laser beam as energy beam so that the different type metal film (3) and the base metal material (1) are combined to form a tableting surface layer (5).
In addition, the different type metal grains (2) used in the provisional filming step are formed of any of sodium fluoride, sodium sulfide, sodium carbide, sodium boride, potassium fluoride, potassium sulfide, potassium carbide, potassium boride, and magnesium stearate.

A method for tableting surface treatment of a tableting punch or die according to a third aspect of the present invention includes a beam irradiation step and a beam irradiation step. In the provisional filming step, a tableting surface of a base metal material (1) is provided with different type metal grains (2) made of a different type of metal from the base metal material (1). The different type metal grains (2) are adhered on the tableting surface of the base metal material (1) by a binder (6) that can be removed by energy of an energy beam whereby forming a different type metal film (3) on the tableting surface of the base metal material (1). In the beam irradiation step, after the different type metal film (3) is formed in the provisional filming step, the tableting surface of the base metal material (1) is irradiated with an electron beam (4) or laser beam as energy beam to remove the binder (6) so that the different type metal film (3) and the base metal material (1) are combined to form a tableting surface layer (5).

A method for tableting surface treatment of a tableting punch or die according to a fourth aspect of the present invention includes a beam irradiation step and a beam irradiation step. In the provisional filming step, a tableting surface of a base metal material (1) is provided with different type metal grains (2) made of a different type of metal from the base metal material (1). The different type metal grains (2) are adhered on the tableting surface of the base metal material (1) by a binder (6) that can be removed by energy of an energy beam whereby forming a different type metal film (3) on the tableting surface of the base metal material (1). In the beam irradiation step, after the different type metal film (3) is formed in the provisional filming step, the tableting surface of the base metal material (1) is irradiated with an electron beam (4) or laser beam as energy beam to remove the binder (6) so that the different type metal film (3) and the base metal material (1) are combined to form a tableting surface layer (5). In addition, the different type metal grains (2) used in the provisional filming step are formed of any of sodium fluoride, sodium sulfide, sodium carbide, sodium boride, potassium fluoride, potassium sulfide, potassium carbide, potassium boride, and magnesium stearate.

A method for tableting surface treatment of a tableting punch or die according to a fifth aspect of the present invention includes a beam irradiation step and a beam irradiation step. In the provisional filming step, a tableting surface of a base metal material (1) is provided with a different type metal film (3) made of a different type metal of a metal different from the base metal material (1). The different type metal film (3) is adhered on the tableting surface of the base metal material (1) by vacuum deposition. In the beam irradiation step, after the different type metal film (3) is formed in the provisional filming step, the tableting surface of the base metal material (1) is irradiated with an electron beam (4) or laser beam as energy beam so that the different type metal film (3) and the base metal material (1) are combined to form a tableting surface layer (5).

In a method for tableting surface treatment of a tableting punch or die according to a sixth aspect of the present invention, in the method according to the fifth aspect of the present invention, in the provisional filming step, different type metal grains (2) are irradiated with an energy beam to heat the different type metal grains (2) so as to produce metal vapor (9) containing a plurality of different types of metals so that the metal vapor (9) is adhered on the surface of the base metal material (1). The different type metal grains (2) are made from powder of the plurality of different types of metals.

In a method for tableting surface treatment of a tableting punch or die according to a seventh aspect of the present invention, in the method according to the third or fourth aspect of the present invention, in the provisional filming step, the different type metal grains (2) are driven and adhered onto the tableting surface of the base metal material (1).

In a method for tableting surface treatment of a tableting punch or die according to an eighth aspect of the present invention, in the method according to any of first to fourth aspects of the present invention, in the provisional filming process, the different type metal film (3) is formed from a plurality of types of different type metal grains (2) made of different types of metals.

In a method for tableting surface treatment of a tableting punch or die according to a ninth aspect of the present invention, in the method according to the fifth aspect of the present invention, in the provisional filming process, the different type metal film (3) is formed from a plurality of types of different type metal materials made of different types of metals.

In a method for tableting surface treatment of a tableting punch or die according to a tenth aspect of the present invention, in the method according to any of first to fourth aspects of the present invention, in the provisional filming step, the metal grains have different means particle diameters, and are discharged onto the surface of the base metal material (1).

In a method for tableting surface treatment of a tableting punch or die according to an eleventh aspect of the present invention, in the method according to the first or third aspect of the present invention, the different type metal grains (2) used in the provisional filming step contain at least one of W, C, B, Ti, Ni, Cr, Si, Mo, Ag, Au, Ba, Be, Ca, Co, Cu, Fe, Mg, Mn, Nb, Pt, Ta, V, F and S, and fluoride, sulfide, nitride, carbide and boride of these metals.

In a method for tableting surface treatment of a tableting punch or die according to a twelfth aspect of the present invention, in the method according to the first or third aspect of the present invention, the different type metal grains (2) used in the provisional filming step contains any of molybdenum disulfide, tungsten sulfide, and boron nitride.

In a method for tableting surface treatment of a tableting punch or die according to a thirteenth aspect of the present invention, in the method according to the first or third aspect of the present invention, the different type metal grains (2) used in the provisional filming step are compounds containing an alloy of a plurality of metals, and a metal.

In a method for tableting surface treatment of a tableting punch or die according to a fourteenth aspect of the present invention, in the method according to the first or third aspect of the present invention, the different type metal grains (2) used in the provisional filming step have a mean particle diameter of not less than 0.03 µm.

In a method for tableting surface treatment of a tableting punch or die according to a fifteenth aspect of the present invention, in the method according to any of first to fourth aspects of the present invention, the different type metal grains (2) used in the provisional filming step have a mean particle diameter of not more than 500 µm.

In a method for tableting surface treatment of a tableting punch or die according to a sixteenth aspect of the present invention, in the method according to the fifth aspect of the present invention, the different type metal used in the provisional filming step contains at least one of Na, K, W, C, B, Ti, Ni, Cr, Si, Mo, Ag, Au, Ba, Be, Ca, Co, Cu, Fe, Mg, Mn, Nb, Pt, Ta, V, F, S, and metal fluoride, metal sulfide, metal nitride, metal carbide and metal boride.

In a method for tableting surface treatment of a tableting punch or die according to a seventeenth aspect of the present invention, in the method according to the fifth aspect of the present invention, the different type metal used in the provisional filming step contains molybdenum disulfide, tungsten sulfide, boron nitride, magnesium stearate, sodium fluoride, sodium sulfide, sodium carbide, sodium boride, potassium fluoride, potassium sulfide, potassium carbide, and potassium boride.

In a method for tableting surface treatment of a tableting punch or die according to an eighteenth aspect of the present invention, in the method according to the fifth aspect of the present invention, the different type metal used in the provisional filming step is compounds containing an alloy of a plurality of types of metal, and a metal.

In a method for tableting surface treatment of a tableting punch or die according to a ninteenth aspect of the present invention, in the method according to the sixth aspect of the present invention, the different type metal grains (2) used in the provisional filming step have a mean particle diameter of 1 µm to 3 mm.

In a method for tableting surface treatment of a tableting punch or die according to a twentyth aspect of the present invention, in the method according to any of first to fifth aspects of the present invention, the base metal material (1) is formed of any of Fe, Al, Cu, steel alloy, aluminum alloy, copper alloy, metal containing Ag, Au, Ba, Ca, Co, Mg, Mn, Ni, Nb, Pt, Ta, Ti and V, silver alloy, gold alloy, calcium alloy, cobalt alloy, chromium alloy, magnesium alloy, manganese alloy, nickel alloy, niobium alloy, tantalum alloy, titanium alloy, vanadium alloy, sintered metal, F and S, and fluoride, sulfide, nitride, carbide, and boride of these metals.

In a method for tableting surface treatment of a tableting punch or die according to a twenty-first aspect of the present invention, in the method according to any of first to fifth aspects of the present invention, in the beam irradiation step, after the different type metal film (3) is formed on the base metal material (1), the base metal material (1) is irradiated with the energy beam in a vacuum or in a gas atmosphere.

In a method for tableting surface treatment of a tableting punch or die according to a twenty-second aspect of the present invention, in the method according to any of first to fifth aspects of the present invention, a polishing step that polishes the surface of the tableting surface layer (5) formed in the beam irradiation step.

In a method for tableting surface treatment of a tableting punch or die according to a twenty-third aspect of the present invention, in the method according to the twenty-second aspect of the present invention, in the polishing step, the tableting surface layer (5) is subjected to shot blasting using polishing powder.

In a method for tableting surface treatment of a tableting punch or die according to a twenty-fourth aspect of the present invention, in the method according to the twenty-second aspect of the present invention, the surface of the tableting surface layer (5) polished in the polishing step is subjected to shot peening for peer-like-surface finish.

In a method for tableting surface treatment of a tableting punch or die according to a twenty-fifth aspect of the present invention, in the method according to the third or fourth aspect of the present invention, in the provisional filming step, the different type metal grains (2) are driven by the energy of pressurized fluid, electric field and/or magnetic field.

In a method for tableting surface treatment of a tableting punch or die according to a twenty-sixth aspect of the present invention, in the method according to the third or fourth aspect of the present invention, in the provisional filming step, a water soluble or organic solvent soluble binder is used as the binder (6) that adheres the different type metal grains (2).

In a method for tableting surface treatment of a tableting punch or die according to a twenty-seventh aspect of the present invention, in the method according to the third or fourth aspect of the present invention, in the provisional filming step, oil is used as the binder (6) that adheres the different type metal grains (2) on the base metal material (1).

In a method for tableting surface treatment of a tableting punch or die according to a twenty-eighth aspect of the present invention, in the method according to the third or fourth aspect of the present invention, in the provisional filming step, a sugar or cellulose group material is used as the binder (6) that adheres the different type metal grains (2) on the base metal material (1).

In a method for tableting surface treatment of a tableting punch or die according to a twenty-ninth aspect of the present invention, in the method according to the third or fourth aspect of the present invention, in the provisional filming step, the binder (6) that adheres the different type metal grains (2) on the base metal material (1) is one material or a mixture of a plurality of materials selected from the group consisting of a material such as gum Arabic, tragacanth, gum karaya, caramel, starch, soluble starch, dextrin, α-starch, sodium alginate, gelatin, locust bean gum and casein; a semi-synthetic material formed from a natural product, the material being any of lignosulfonate, carboxymethyl cellulose sodium salt, methyl cellulose, hydroxyethyl cellulose, sodium salt of carboxymethylated starch, hydroxy-ethylated starch, sodium salt of starch phosphate, hydroxypropyl cellulose, hydroxypropyl methyl cellulose, ethyl cellulose, acetyl cellulose, and ester gum; and a composite formed from any of polyvinyl alcohol, polyvinyl methyl ether, polyacrylamide, sodium salt of polyacrylic acid, water-soluble copolymer, copolymer of partially saponificated vinyl acetate and vinyl ether, acrylic acid, methacrylic acid, maleic acid and polymer or copolymer of maleic acid ester or salt, polyethylene glycol, polyethylene oxide, polyvinyl pyrrolidone, vinylpyrrolidone-vinyl acetate copolymer, polyvinyl acetate, coumarone resin, petroleum resin, and phenolic resin.

In a method for tableting surface treatment of a tableting punch or die according to a thirtieth aspect of the present invention, in the method according to the third or fourth aspect of the present invention, in the provisional filming step, an irradiation-setting resin capable of being cured by ultraviolet irradiation is used as the binder (6) that adheres the different type metal grains (2) on the base metal material (1).

In a method for tableting surface treatment of a tableting punch or die according to a thirty-first aspect of the present invention, in the method according to the third or fourth aspect of the present invention, in the provisional filming step, after the binder (6) is applied on the surface of the base metal material (1), the different type metal grains (2) are driven to collide with the surface of the base metal material (1) with the binder (6) applied thereon whereby forming the different type metal film (3).

In a method for tableting surface treatment of a tableting punch or die according to a thirty-second aspect of the present invention, in the method according to the third or fourth aspect of the present invention, in the provisional filming step, the different type metal grains (2) are driven to collide with the surface of the base metal material (1), and both of the binder (6) and the different type metal grains (2) are driven toward the surface of the base metal material (1) whereby forming the different type metal film (3).

In a method for tableting surface treatment of a tableting punch or die according to a thirty-third aspect of the present invention, in the method according to the third or fourth aspect of the present invention, the binder (6) is a powdery material. In the provisional filming step, the powdery binder (6) and the different type metal grains (2) are adhered on the surface of the base metal material (1) by electrostatic force, and are then heated so that the different type metal grains (2) are coupled to the surface of the base metal material (1) by the medium of the binder (6) whereby forming the different type metal film (3).

In a method for tableting surface treatment of a tableting punch or die according to a thirty-fourth aspect of the present invention, in the method according to the third or fourth aspect of the present invention, in the provisional filming step, a coating agent is sprayed onto the surface of the different type metal film (3).

A tableting punch or die according to a thirty-fifth aspect of the present invention includes a base metal material 1 and a tableting surface layer 5. The tableting surface layer (5) is formed by combining a different type metal film (3) and the base metal material (1) by irradiation with an electron beam (4) or laser beam as energy beam. A tableting surface of the base metal material (1) is subjected to shot peening using different type metal grains (2) made of a different type of metal from the base metal material (1) so that the different type metal film (3) is formed.

A tableting punch or die according to a thirty-sixth aspect of the present invention includes a base metal material 1 and a tableting surface layer 5. The tableting surface layer (5) is formed by combining a different type metal film (3) and the base metal material (1) by irradiation with an electron beam (4) or laser beam as energy beam. A tableting surface of the base metal material (1) is subjected to shot peening using different type metal grains (2) made of a different type of metal from the base metal material (1) so that the different type metal film (3) is formed. The different type of metal from the base metal material (1) contains any of sodium fluoride, sodium sulfide, sodium carbide, sodium boride, potassium fluoride, potassium sulfide, potassium carbide, potassium boride, and magnesium stearate.

A tableting punch or die according to a thirty-seventh aspect of the present invention includes a base metal material 1 and a tableting surface layer 5. The tableting surface layer (5) is formed by combining a different type metal film (3) and the base metal material (1) by irradiation with an electron beam (4) or laser beam as energy beam. Different type metal grains (2) are made of a different type of metal from the base metal material (1) and are adhered on a tableting surface of the base metal material (1) by a binder (6) that is removed by energy of the energy beam in the irradiation with the energy beam so that the different type metal film (3) is formed on the tableting surface of the base metal material (1).

A tableting punch or die according to a thirty-eighth aspect of the present invention includes a base metal material 1 and a tableting surface layer 5. The tableting surface layer (5) is formed by combining a different type metal film (3) and the base metal material (1) by irradiation with an electron beam (4) or laser beam as energy beam. Different type metal grains (2) are made of a different type of metal from the base metal material (1) and are adhered on a tableting surface of the base metal material (1) by a binder (6) that is removed by energy of an energy beam in the irradiation with the energy beam so that the different type metal film (3) is formed on the tableting surface of the base metal material (1). The different metal grains (2) contain any of sodium fluoride, sodium sulfide, sodium carbide, sodium boride, potassium fluoride, potassium sulfide, potassium carbide, potassium boride, and magnesium stearate as the different type of metal from the base metal material (1).

A tableting punch or die according to a thirty-ninth aspect of the present invention includes a base metal material 1 and a tableting surface layer 5. The tableting surface layer (5) is formed by combining a different type metal film (3) and the base metal material (1) by irradiation with an electron beam (4) or laser beam as energy beam. The different type metal film (3) is made of a different type metal of a metal different from the base metal material (1), and is formed on the tableting surface of the base metal material (1) by vacuum deposition.

In a tableting punch or die according to a fortieth aspect of the present invention, in the tableting punch or die according to any of thirty-fifth to thirty-ninth aspects of the present invention, the friction coefficient of the tableting surface layer (5) is not more than 0.5.

In a tableting punch or die according to a forty-first aspect of the present invention, in the tableting punch or die according to any of thirty-fifth to thirty-ninth aspects of the present invention, the arithmetic mean roughness Ra of the surface of the tableting surface layer (5) is not less than 0.1 µm and not more than 5 µm.

A tablet according to a forty-second aspect of the present invention is formed by using the tableting punch or die according to any of thirty-fifth to forty-first aspects of the present invention.

In a tablet according to a forty-third aspect of the present invention, the content of lubricant is not more than 0.2 % by weight. A tablet according to a forty-fourth aspect of the present invention contains no lubricant.

A tablet according to a forty-fifth aspect of the present invention is any of fast disintegrating tablet, oral disintegrating tablet, and vaginal disintegrating tablet. A tablet according to a forty-sixth aspect of the present invention is any of medicine, health food, candy, and quasi drug.

### Effects of the Invention

The durability of a tableting punch or die subjected to a treatment method according to the present invention can be increased by one hundred times or more as compared with the punch and die that has been developed by the inventors and is disclosed in Patent Document 5. In addition, the present invention can provide a punch or die that can form a tablet even in the case of a medicine substantially without lubricant in a fine shape. Such a medicine substantially without lubricant cannot be formed into a tablet by conventional punches or dies, which have poor releasability. For example, four types of punches and dies of the following first to fourth punches and dies are formed. Medicines having the following compositions are formed into tablets by the four types of punches and dies. The results are as follows.

Composition of Medicine

| | |
|---|---|
| lbuprofen | 50% by weight |
| Hydroxypropyl Starch | 30% by weight |
| Synthetic Aluminum Silicate | 10 % of the weight |
| Microcrystalline cellulose | 10% by weight |

(1) The first punch and die are subjected to hard chromium plating on its tableting surface.
(2) The first punch and die are subjected to chromium nitride coating on its tableting surface.
(3) The third punch and die are provided with a hardened layer of chromium nitride that is formed on its tableting surface by the method of Patent Document 5, that is, by electric discharge processing (the punch and die that have been developed by inventors, and are disclosed in Patent Document 5).
(4) The fourth punch and die are subjected to a surface treatment method according to the present invention.

In the case of the first and second punches and the dies, the medicine is adhered on the surface of the punch after 20 tablets are formed.
In the case of the third punch and the die, the medicine is adhered on the surface of the punch after 40 tablets are formed.
In the case of the fourth punch and die subjected to the surface treatment method according to the present invention, the medicine is not adhered after 2000 tablets are formed.
In summary, although the aforementioned composition does not contain magnesium stearate as a lubricant, since the punch and die have excellent surface releasability, the medicine is not adhered even in the case where the medicine does not contain such a lubricant.
Contrary to this, the results show that a lubricant is required to be added in the case of the first to third punches and dies.

In addition, a tableting surface treatment method of a punch or die according to the first aspect of the present invention has a feature in that a tableting surface layer that can be formed of various metals can be simply, easy, efficiently and reliably coupled to the surfaces of various types of base metal materials. The reason is that, in the tableting surface treatment method according to the present invention, a surface of a base metal material is subjected to shot peening using different type metal grains so that a different type metal film is formed on the surface of the base metal material, and, after the different type metal film is formed, the surface of the base metal material is irradiated with an energy beam so that the different type metal film and the base metal material are combined. In particular, the tableting surface treatment method according to the present invention is **characterized in that** the surface of the base metal material is subjected to shot peening so that a different type metal film is formed on the surface of the base metal material, and the surface of the base metal material is irradiated with an energy beam. Dissimilar to different type metal film formation by plating, shot peening does not require effluent treatment. In addition, as compared with thermal spraying, the different type metal film can be efficiently formed by a simple device. In addition, as for the different type metal film formed by shot peening using the different type metal grains, the film thickness of the different type metal film can be controlled by the particle diameter of the different type metal grains used in the shot peening. The reason is that, when different type metal grains with large particle diameter are used in shot peening, since the different type metal grains with large particle diameter are adhered on the tableting surface of the base metal material, the different type metal film will have a large film thickness. For this reason, according to the tableting surface treatment method according to the present invention, tableting surface layers can be formed suitable for applications by controlling the film thickness of the different type metal film by controlling the particle diameter of the different type metal grains. In addition, according to the method of shot peening using the different type metal grains, it is possible to form a different type metal film with uniform film thickness on the surface of a base metal material. The reason is that, in the case where a different type metal film is formed by shot peening, the different type metal grains are adhered in single layer structure onto the surface of a base metal material. When different type metal grains are discharged onto the surface of a base metal material by shot peening, although discharged different type metal grains are adhered onto the base metal material, discharged different type metal grains are not adhered onto different type metal grains that have been adhered on the base metal material. For this reason, even if different type metal grains are unevenly discharged onto the surface of a base metal material, the different type metal grains are adhered in single layer structure on the surface of the base metal material so that a different type metal film with uniform film thickness can be formed. This is very important for a treatment method that combines the base metal material and the different type metal film by irradiation with an energy beam. The reason is that, when the surface of the base metal material is scanned with the energy beam at a constant energy density, the different type metal film with uniform film thickness and the base metal material can be coupled under uniform conditions. When the surface of a base metal material is irradiated with an energy beam, the optimum energy density of the beam energy varies in accordance with the film thickness of a different type metal film. In order to combine the different type metal film and the base metal material in ideal conditions, when the different type metal film is thick, the energy beam is radiated at high energy density, on the other hand, when the different type metal film is thin, the energy beam is radiated at low energy density. If a thick different type metal film is irradiated with an energy beam at low energy density, the metal of the different type metal film and the base metal material cannot be completely combined. On the other hand, if a thin different type metal film is irradiated with an energy beam at high energy density, the different type metal film will be removed by heat. According to the tableting surface treatment method of the first aspect of the present invention, since a different type metal film is formed on the surface of a base metal material by shot peening, the different type metal film can be uniformly formed which has a suitable film thickness for applications. As a result, when this different type metal film with uniform film thickness is irradiated with an energy beam, it is possible to combine the different type metal and the base metal material under the ideal conditions, and to reliably couple them to each other.

In addition, a tableting surface treatment method of a punch or die according to the third aspect of the present invention has a feature in that various metals can be simply, easy, efficiently and reliably coupled onto tableting surfaces of various types of base metal materials. The reasonis that, in the tableting surface treatment method of the present invention, a tableting surface of a base metal material is provided with different type metal grains made of a different type of metal from the base metal material, and the different type metal grains are adhered on the tableting surface of the base metal material by a binder that can be removed by energy of an energy beam whereby forming a different type metal film on the tableting surface of the base metal material, in addition, after the different type metal film is formed in the provisional filming step, the tableting surface of the base metal material is irradiated with an electron beam or laser beam as energy beam to remove the binder so that the different type metal film and the base metal material are combined to form a tableting surface layer.

In addition, the tableting surface treatment method according to the third aspect of the present invention has a feature in that, since the different type metal film formed of the different type metal grains is formed on the surface of the base metal material by the medium of the binder, a thick different type metal film can be formed on the surface of the base metal material. Additionally, the tableting surface treatment method according to the third aspect of the present invention has a feature in that, since the amount of metal flying out of the different type metal film can be smalle in a process of irradiation of the different type metal film with the energy beam, a film subjected to surface treatment can be formed which has a film thickness required for the surface of the base metal material.

In addition, the tableting surface treatment method according to the third aspect of the present invention has a feature in that effluent treatment is unnecessary dissimilar to plating. Additionally, the tableting surface treatment method according to the third aspect of the present invention has a feature in that the tableting surface can be efficiently treated by a simple device as compared with tableting surface treatment by thermal spraying. In addition, in the case where a different type metal film is formed by driving different type metal grains to collide with the different type metal film, the film thickness of the different type metal film can be controlled by the particle diameter of the different type metal grains. If different type metal grains with large particle diameter are driven toward the surface of a base metal material to collide with the surface of the base metal material to form a different type metal film by the medium of a binder, the different type metal grains with large particle diameter can form a different type metal film with thick film thickness. For this reason, according to the tableting surface treatment method according to the present invention, films subjected to surface treatment can be formed suitable for applications by controlling the film thickness of the different type metal film by controlling the particle diameter of the different type metal grains. Also, in the case where the different type metal grains are driven toward the surface of a base metal material to collide with the surface of the base metal material to form a different type metal film by the medium of a binder, it is possible to form a different type metal film with uniform film thickness on the surface of a three dimensionally uneven base metal material.

In addition, in a tableting surface treatment method according to the second or third aspect of the present invention, the different type metal grains are formed of any of sodium fluoride, sodium sulfide, sodium carbide, sodium boride, potassium fluoride, potassium sulfide, potassium carbide, potassium boride, and magnesium stearate. A punch or die subjected to surface treatment using the different type metal grains has a feature of very excellent tableting surface releasability. Accordingly, even in the case where no lubricant is used, or in the case where the amount of a lubricant is minimized, it is possible to effectively prevent that a medicine is adhered on the surface of the punch or die.

In addition, a tableting surface treatment method of a punch or die according to the fifth aspect of the present invention has a feature in that a tableting surface layer that can be formed of various metals can be simply, easy, efficiently and reliably coupled to the surfaces of various types of base metal materials. The reason is that, in the tableting surface treatment method according to the present invention, a tableting surface of a base metal material is provided with a different type metal film by vacuum deposition using a different type metal of a metal different from the base metal material so that a different type metal film is formed on the surface of the base metal material, and, after the different type metal film is formed, the surface of the base metal material is irradiated with an energy beam so that the different type metal film and the base metal material are combined. In particular, the tableting surface treatment method according to the present invention is **characterized in that** a different type metal film is formed on the tableting surface of the base metal material by vacuum deposition, and the surface of the base metal material is irradiated with an energy beam. In vacuum deposition, a different type metal is heated to produce metal vapor, and the metal vapor is then adhered onto the surface of a base metal material so that a different type metal film is formed. In this method, since a different type metal in metal vapor is heated and then adhered, a pure different type metal film can be formed. Dissimilar to different type metal film formation by plating, effluent treatment is unnecessary. In addition, as for the different type metal film formed by vacuum deposition using a different type metal, the film thickness of the different type metal film can be controlled by deposition time in that metal vapor is deposited. For this reason, according this method, tableting surface layers with suitable film thickness for applications can be formed by adjusting the film thickness of the different type metal film to a desired film thickness. In addition, according to the method of different type metal vacuum deposition, it is possible to form a different type metal film with uniform film thickness on the surface of a base metal material. As discussed above, this is very important for a treatment method that combines the base metal material and the different type metal film by irradiation with energy beam. According to this method, the different type metal film can be uniformly formed which has a suitable film thickness for applications. As a result, when this different type metal film with uniform film thickness is irradiated with an energy beam, it is possible to combine the different type metal and the base metal material under the ideal conditions, and to reliably combine them.

In a tableting surface treatment method of a punch or die according to the sixth aspect of the present invention, in the provisional filming step, different type metal grains are irradiated with an energy beam to heat the different type metal grains so as to produce metal vapor containing a plurality of different types of metals so that the metal vapor is adhered on the surface of the base metal material. The different type metal grains are made from powder of the plurality of different types of metals. In this method, it is possible to easily form a different type metal film formed of a plurality of types of metals in ideal conditions.

In a tableting surface treatment method of a punch or die according to the seventh aspect of the present invention, in addition to formation of the different type metal film on the tableting surface of the base metal material by adhering the different type metal grains by the binder that can be removed by energy of an energy beam, the different type metal grains are driven to collide with the tableting surface of the base metal material to form the different type metal film. In this method, the different type metal grains collide with the surface of the base metal material, and then densely arranged without absence in contact with the surface of the base metal material. In the case where the different type metal film is formed from the different type metal grains that are adhered in this dense state, since different type metal grains are arranged close to each other, it is possible to reduce the amount of the binder between the different type metal grains, and the amount of the binder between the different type metal grain and the tableting surface of the base metal material. When driven toward the base metal material, the different type metal grains collide with the surface of the base metal material. Thus, the different type metal grains with kinetic energy enter the uncured or cured binder. The entry depth of the different type metal grain in the binder can be specified by the kinetic energy of the different type metal grains. The kinetic energy of the different type metal grain is proportional to the product of the square of its speed at collision with the base metal material, and its mass. The mass can be obtained by the product of its volume and its specific gravity. Even when having a small particle diameter, different type metal grains made of metal have a large specific gravity. Accordingly, the different type metal grains will have large kinetic energy. When having large kinetic energy, the different type metal grains will deeply enter the binder on the surface of the base metal material at collision with the surface of the base metal material. When deeply entering the binder, the different type metal grains come in contact with the surface of the base metal material, and are densely arranged side by side on the surface. As a result, the different type metal film can be formed from the different type metal grains arranged in the dense state.

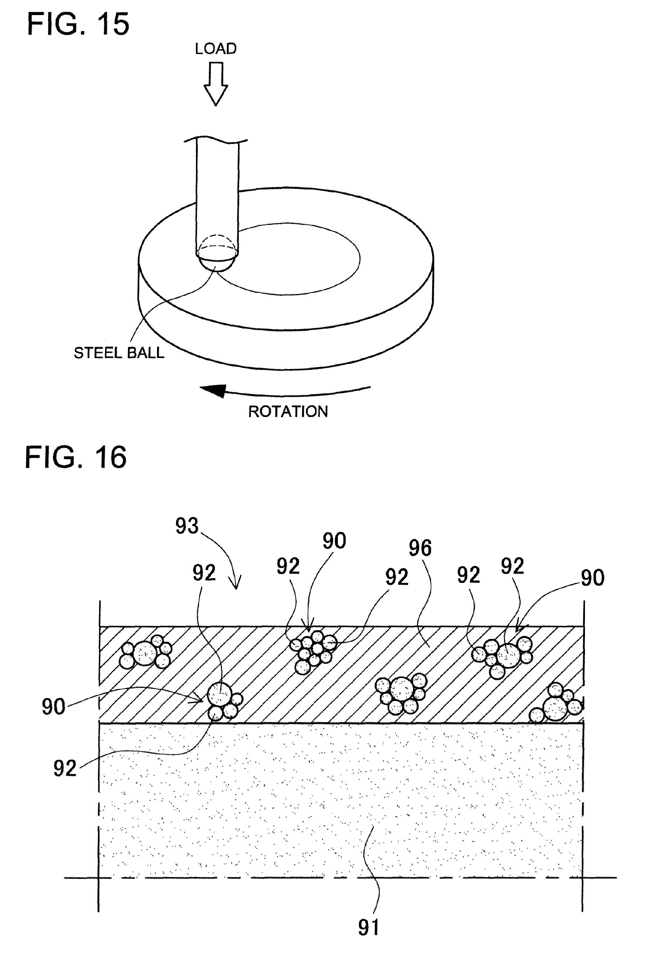

In the tableting surface treatment method, different type metal grains may be mixed and agitated in a binder, and the mixed and agitated material may be applied on the surface of the base metal material to form the different type metal film. However, in the case of the different type metal film formed by this method, as shown in Fig. 16, powdery metal particles 92 aggregate to form various aggregating particle groups 90 with various sizes. The aggregating particle groups 90 are unevenly adhered on the base metal material 91 by a binder 96 in a low density state with aggregating particle groups 90 being out of intimate contact with the surface of the base metal material 91. If a different type metal film 93 with this configuration is irradiated with an energy beam, the surface state will remarkably vary in accordance with the energy of the energy beam, the sizes of the aggregating particle groups, and parts of the different type metal film 93. That is, in a part of the different type metal film 93 where the aggregating particle groups are arranged close to each other on the surface of the base metal material, since the aggregating particle groups are melted by the energy beam to form an alloy layer, this part will be a convex part. That is, in a part of the different type metal film 93 where the aggregating particle groups are not arranged close to each other on the surface of the base metal material, the surface of the base metal material is irradiated with the energy beam and is melted. Accordingly, the surface of the base metal material will be recessed, and the melted base metal material will fly out of the surface. Thus, this part will be a concave part. As a result, after the energy beam irradiation, the surface of the base metal material will be uneven. In addition, the alloy layer will be unevenly formed. Consequently, uniform and desirable surface treatment cannot be conducted. If a base metal material with this configuration is used as a frictional surface, such a base metal material may damage a material to come into contact with the base material. In this case, there is a disadvantage in that such a material to come into contact with the base material may be remarkably damaged.

In contrast to this, according to the tableting surface treatment method of a punch or die of the seventh aspect of the present invention, the different type metal film to be formed in the provisional filming step can be formed with the different type metal grains being densely arranged on the surface of the base metal material. The reason is that the different type metal grains are driven toward the base metal material and collide with the surface of the base metal material to form the different type metal film. The different type metal grains are scattered by the shock of the collision when colliding with the surface of the base metal material, and the different type metal grains do not aggregate but are intimately coupled onto the surface of the base metal material. In the case where different type metal grains are driven to collide with the surface of the base metal material, the different type metal grains enter the uncured binder and are intimately coupled onto the surface of the base metal material. Also, in the case where different type metal grains collide with the surface of the cured binder, the different type metal grains with kinetic energy can enter the binder and are intimately coupled onto the surface of the base metal material. The reason is that the hardness of the cured binder is sufficiently small as compared with the base metal material.

In the case where the different type metal film is thus formed, in other words, in the case where the different type metal grains being intimately coupled onto the surface of the base metal material, when the different type metal film is irradiated with an energy beam, the different type metal grains melt and are combined to the surface of the base metal material by heat to form the tableting surface layer.

In addition, in a tableting surface treatment method of a punch or die according to a twenty-second aspect of the present invention, after the different type metal film and the base metal material are combined, or after the different type metal film and the base metal material are combined so that the tableting surface layer is formed, the surface of the tableting surface layer is polished in a polishing step. Additionally, in a tableting surface treatment method of a punch or die according to a twenty-third aspect of the present invention, in the polishing step, the tableting surface layer is subjected to shot blasting using polishing powder. The tableting surface layer polished by shot blasting can be a smooth surface, and can have a smaller frictional resistance. In addition, since the tableting surface layer polished by shot blasting can be a smooth surface, it is possible to reduce wear in a contact surface to be in contact with the tableting surface layer. In particular, according to this method, it is possible to smooth beam irradiation marks that appear due to energy beam scanning, and to properly adjust the surface roughness of the tableting surface layer. As a result, it is possible to provide fine surface finish. In particular, according to this method, it is possible to polish the irradiation marks that appear due to the energy beam irradiation so that certain smoothness is obtained by controlling the polishing. As a result, it is possible to provide ideal surface roughness. In the case where slide surfaces slide relative to each other in contact with each other, it cannot be always said that perfect smooth surfaces are ideal. For example, if sliding surfaces with smoothness of 0.01 µm are in contact with each other, a vacuum will be created. Thus, the sliding surfaces hardly slide relative to each other. For this reason, in the case where the friction coefficient between sliding surfaces is adjusted to the minimum value, the friction coefficient and the surface roughness of the base metal material surface are important. As discussed above, in the method according to the present invention in that energy beam irradiation marks appear due to beam scanning using energy beam irradiation, surface roughness can be controlled in the subsequent polishing step to provide an optimum surface roughness. Therefore, since the tableting surface treatment method according to the present invention includes the polishing step after the beam irradiation step, there is a feature in that an ideal sliding surface can be provided by controlling the surface roughness of the tableting surface layer finished in this polishing step.

In particular, according to a punch or die of the forty-first aspect of the present invention in that the arithmetic mean roughness Ra of the surface of the tableting surface layer is not less than 0.1 µm and not more than 5 µm, it is possible to provide excellent releasability, and therefore to ideally release a powdery medicine.

### Detailed Description of the Preferred Embodiments

The following description will describe embodiments according to the present invention with reference to the drawings. It should be appreciated, however, that the embodiments described below are illustrations of a method for tableting surface treatment of a tableting punch or die, a punch or die subjected to the surface treatment by this method, and a tablet formed by using this tableting punch or die to give a concrete form to technical ideas of the invention, and a method for tableting surface treatment of a tableting punch or die, a punch or die subjected to the surface treatment by this method, and a tablet formed by using this tableting punch or die are not specifically limited to description below.

In this specification, reference numerals corresponding to components illustrated in the embodiments are added in "Claims" and "Means for Solving Problem" to aid understanding of claims. However, it should be appreciated that the members shown in claims attached hereto are not specifically limited to members in the embodiments.

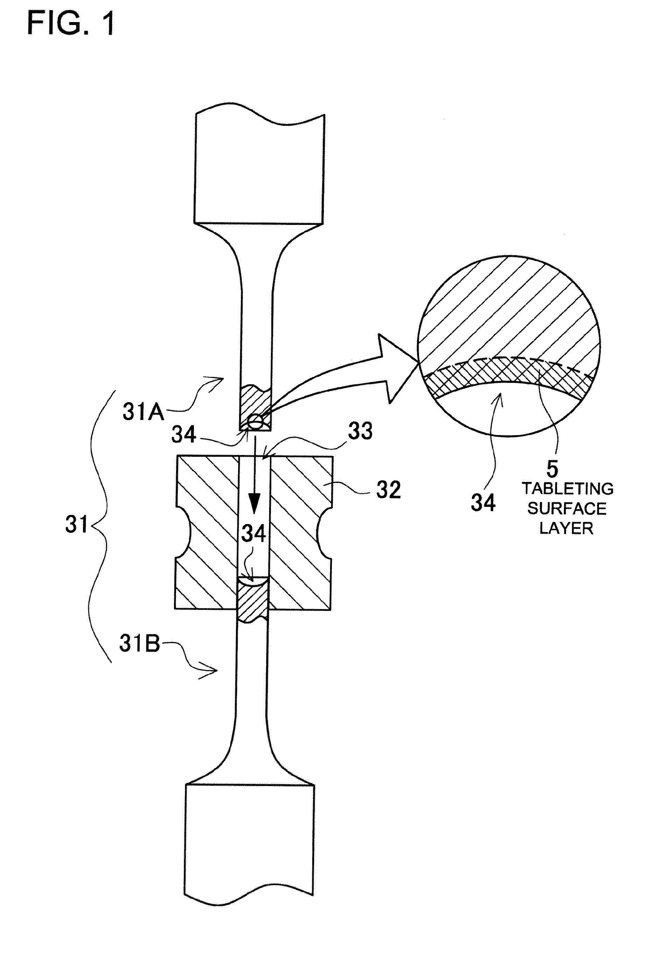

A tableting apparatus shown in Fig. 1 has punches 31 and a die 32 that press a powdery medicine to form a tablet. In the tableting apparatus, the die 32 has a die bore 33 vertically extending at the center of the die 32. Upper and lower punches 31 A and 31 B as the punches 31 are inserted into the die bore 33 from the upper and lower sides, respectively. The vertical position of the lower punch 31 B is adjusted for the volume of a tablet to be formed. When the lower punch 1 B is placed in position, the die bore 33 is filled with the powdery medicine. After that, the upper punch 31A is inserted into the die bore 33, and compresses the powdery medicine to form a tablet. Finally, the lower punch 31 B is moved upward, the formed tablet is taken out of the die bore 33.

For example, the tableting pressure by the upper punch 31 A in the powdery medicine press can be 1 to 30 kN, preferably 5 to 30 kN, and more preferably approximately 8 to 25 kN. For example, the inner diameter of the die bore 33 can be 3 mm to 20 mm, preferably approximately 3 mm to 13 mm, and more preferably 4 mm to 10 mm. The die bore 33 can have a cylindrical shape, or a different diameter shape such as oval or oblong. The ends of the lower and upper punches 31B and 31 A to be inserted into the die bore 33 have a cylindrical shape with substantially the same inner diameter as (properly speaking, slightly smaller than) the inner diameter of the die bore 33. Thus, the lower and upper punches 31 B and 31 can be smoothly inserted into the die bore 33. As a result, it is possible to prevent that the powdery medicine leaks from parts between the punches 31 B and 31, and the die bore 33 when a tablet is formed.

As shown in an enlarged cross-sectional view in Fig. 1, each punch 31 has a tableting surface layer 5 that is located on a tableting surface 34 side where the powdery medicine is compressed. The tableting surface layer 5 prevents that the powdery medicine is adhered on the tableting surface 34, and improves the durability of the punch 31. In the tableting surface treatment method of a tableting punch or die according to the present invention, the tableting surface layers 5 is formed on the tableting surface side of the punch or die as discussed below.

In the tableting surface treatment method of a tableting punch or die according to the present invention, a tableting surface of a base metal material is provided with different type metal grains made of a different type of metal from the base metal material, in a provisional filming process. The different type metal grains are adhered on the tableting surface of the base metal. After the provisional filming process, the tableting surface of the base metal material is irradiated with an electron beam or laser beam as energy beam so that the different type metal film and the base metal material are combined to form a tableting surface layer, in a beam irradiation process.

A tablet is formed by the punches 31 and the die 32. The content of a lubricant this tablet can be not more than 0.2 % by the weight. However, needless to say, a punch or die according to the present invention can form a tablet that contains 0.2 % by the weight or more of lubricant. Tablets that contain not more than 0.2 % by the weight of lubricant are suitable, in addition to normal tablets, for fast disintegrating tablets, oral disintegrating tablets and vaginal disintegrating tablets, which can disintegrate in an aqueous solution within 30 seconds. The reason is that interference by lubricant with disintegration in water is suppressed. A tablet formed by a punch or die according to the present invention can be used as medicine, health food, candy, quasi drug and the like. In addition, a tablet formed by a punch or die according to the present invention can be suitably used as bath additive, disinfectant, tableted ceramic product, tablet for air back, and the like.

In the provisional filming process, a tableting surface of a base metal material is subjected to shot peening using different type metal grains made of a different type of metal from the base metal material so that a different type metal film is formed on the tableting surface of the base metal material. Alternatively, the different type metal grains are adhered on the tableting surface of the base metal material by a binder that can be removed by energy of an energy beam whereby forming a different type metal film on the tableting surface of the base metal material. Alternatively, a different type metal film made of a different type metal of a metal different from the base metal material is formed by vacuum deposition.

For example, the base metal material of a punch or die is formed of any of Fe, Al, Cu, steel alloy, aluminum alloy, copper alloy, metal containing Ag, Au, Ba, Ca, Co, Mg, Mn, Ni, Nb, Pt, Ta, Ti and V, silver alloy, gold alloy, calcium alloy, cobalt alloy, chromium alloy, magnesium alloy, manganese alloy, nickel alloy, niobium alloy, tantalum alloy, titanium alloy, vanadium alloy, sintered metal, F and S, and fluoride, sulfide, nitride, carbide and boride of these metals, and the like. The base metal material formed of metal fluoride, metal sulfide, metal nitride, metal carbide or metal boride are fluoride, sulfide, nitride, carbide, and boride of metals such as Fe, Al, Cu, Ag, Au, Ba, Ca, Co, Mg, Mn, Ni, Nb, Pt, Ta, Ti and V.

The different type metal grains, which form the different type metal, contain at least one of W, C, B, Ti, Ni, Cr, Si, Mo, Ag, Au, Ba, Be, Ca, Co, Cu, Fe, Mg, Mn, Nb, Pt, Ta, V, F and S, and fluoride, sulfide, nitride, carbide and boride of these metals. The different type metal grains of the different type metal can be a mixture of a plurality of types of different type metal grains. The different type metal grains of the different type metal film can be metal grains that have a melting point lower than the base metal material. Conversely, the different type metal grains can be metal grains that have a melting point higher than the base metal material. Also, the different type metal grains can be a mixture of two types of metal grains that have melting points lower and higher than the base metal material. In order to reduce the frictional resistance of the surface of the base metal material, and additionally to improve the wear resistance of the surface of the base metal material, any of molybdenum disulfide, tungsten sulfide and boron nitride, or mixture of them is used as the different type metal grains.

A for different type metal grains that are used to form a different type metal film by shot peening or by a binder that can be removed by energy of an energy beam, in order to reduce the frictional resistance of the surface of the base metal material, and additionally to improve the wear resistance of the surface of the base metal material, the different type metal grains can be formed of any of sodium fluoride, sodium sulfide, sodium carbide, sodium boride, potassium fluoride, potassium sulfide, potassium carbide, potassium boride, and organic acid magnesium salt such as magnesium stearate. The different type metal of the different type metal can be a mixture of a plurality of different types of metals. The different type metal of the different type metal film can be metal grains that have a melting point lower than the base metal material. Conversely, the different type metal grains can be metal grains that have a melting point higher than the base metal material. Also, the different type metal can be a mixture of two types of metals that have melting points lower and higher than the base metal material.

The different type metal that forms the different type metal film contains at least one of Na, K, W, C, B, Ti, Ni, Cr, Si, Mo, Ag, Au, Ba, Be, Ca, Co, Cu, Fe, Mg, Mn, Nb, Pt, Ta, V, F, S, and metal fluoride, metal sulfide, metal nitride, metal carbide and metal boride. The different type metal of the different type metal can be a mixture of a plurality of different types of metals. The different type metal of the different type metal film can be metal grains that have a melting point lower than the base metal material. Conversely, the different type metal grains can be metal grains that have a melting point higher than the base metal material. Also, the different type metal can be a mixture of two types of metals that have melting points lower and higher than the base metal material. In order to reduce the frictional resistance of the surface of the base metal material, and additionally to improve the wear resistance of the surface of the base metal material, the different type metal is any of molybdenum disulfide, tungsten sulfide, boron nitride, magnesium stearate, sodium fluoride, sodium sulfide, sodium carbide, sodium boride, potassium fluoride, potassium sulfide, potassium carbide and potassium boride, or mixture of them.

### [Provisional Filming Process by Shot Peening]

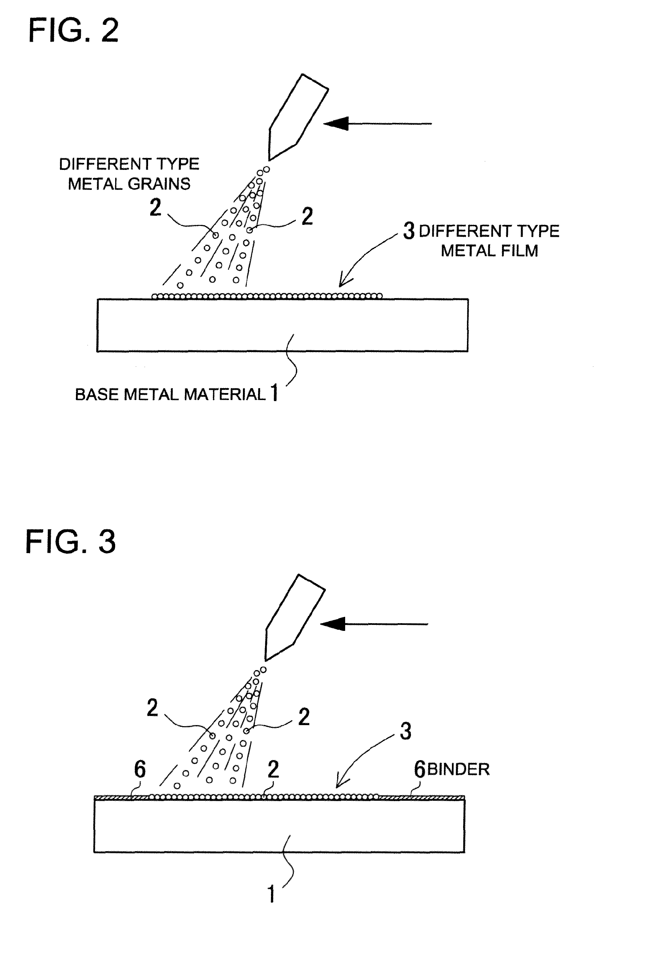

In a provisional filming process by shot peening shown in Fig. 2, a tableting surface of a base metal material 1 is subjected to shot peening using different type metal grains 2 made of a different type of metal from the base metal material 1 so that a different type metal film 3 is formed on the surface of the base metal material 1.

In the shot peening, a mixture of a plurality of types of different type metal grains can be used. The different type metal grains used in the shot peening can be metal grains that have a melting point lower than the base metal material. Conversely, the different type metal grains can be metal grains that have a melting point higher than the base metal material. Also, the different type metal grains can be a mixture of two types of metal grains that have melting points lower and higher than the base metal material.

In a method that subjects the base metal material 1 to shot peening using the different type metal grains 2 to combine the base metal material 1 and the different type metal grains 2, the different type metal grains 2 collide with the base metal material 1 at high momentum so that the base metal material 1 and the different type metal grains 2 are physically combined by the kinetic energy of the different type metal grains 2. Accordingly, various types of metals can be used for the base metal material 1 and the different type metal grains 2.

In the provisional filming process, different type metal grains 2 that have a mean particle diameter of 0.03 µm to 500 µm are discharged by a discharging pressure of not less than 0.3 MPa, preferably not less than 0.5 MPa toward the surface of the base metal material 1. The film thickness of the different type metal film 3 can be determined by the mean particle diameter of the different type metal grains 2, which are discharged toward the base metal material 1. Accordingly, as for the different type metal grains 2 to be discharged toward the base metal material 1, different type metal grains will be selected that have an optimum mean particle diameter in consideration of the film thickness of the different type metal film 3. The different type metal grains can preferably have a mean particle diameter of 0.1 µm to 50 µm, more preferably 0.3 µm to 10 µm. Also, as the different type metal grains, grains may be used that includes carrier grains and fine metal grains adhered on the surface of the carrier grains. The carrier grains will not form the different type metal film. The fine metal grains will form the different type metal film. In such different type metal grains, the carrier grains can have a mean particle diameter of 100 µm to 1 mm, and the fine metal grains can have a mean particle diameter of 0.3 µm to 30 µm. In such different type metal grains, the fine metal grains can be small, in other words, the different type metal film can be thin, so that the thin different type metal film can be efficiently adhered on the surface of the base metal material. The reason is that the kinetic energy of large carrier grains is large, and as a result the fine metal grains collide with the surface of the base metal material at high momentum.

### [provisional Filming Process by Using Binder]

Also, in the tableting surface treatment method according to the present invention, the different type metal grains can be adhered to the tableting surface of the base metal material by a binder to form a different type metal film. In the provisional filming process, the different type metal grains may be mixed into an uncured binder in the form of liquid or a paste, and be applied or sprayed onto the tableting surface of the base metal material to form the different type metal film after the binder is cured. However, in the provisional filming process, as shown in Fig. 3, it is preferable that a base metal material 1 is provided with different type metal grains 2 made of a different type of metal from the base metal material 1, and the different type metal grains 2 are driven toward the base metal material 1 to collide with the base metal material 1 so that the different type metal grains 2 are adhered on the surface of the base metal material 1 by a binder 6 that can be removed by energy of an energy beam whereby forming a different type metal film 3 on the surface of the base metal material 1.

In the provisional filming process shown in Fig. 3, the different type metal grains 2 are adhered on the surface of the base metal material 1 by the binder 6 to form the different type metal film 3. The different type metal grains 2 are made of a different type of metal from the base metal material 1. The different type metal grains 2 are driven toward the base metal material 1, and collide with the surface of the base metal material 1 so that the different type metal grains 2 are adhered to the surface of the base metal material 1 by the binder 6.

In order to form the different type metal film 3 formed of the different type metal grains 2 on the base metal material 1, the binder 6 is applied to the surface of the base metal material 1, and the different type metal grains 2 are driven toward the surface of the base metal material 1 with the binder 6 being applied on the base metal material 1 so that the driven different type metal grains 2 collide with the surface of the base metal material 1. When colliding with the surface of the base metal material 1, the different type metal grains 2 enter the inside of the binder 6 by their kinetic energy, and are intimately coupled onto the surface of the base metal material 1 to form the different type metal film 3.

The different type metal grains 2 are driven by the energy of pressurized fluid or by an electric field to collide with the surface of the base metal material 1. The pressurized fluid for driving the different type metal grains 2 is pressurized air or pressurized liquid. Shot peening is suitable for driving the different type metal grains 2 by using pressurized air. In the shot peening, the different type metal grains 2 are driven by pressurized air, and collide with the surface of the base metal material 1. In the shot peening, the different type metal grains 2 are driven toward the surface of the base metal material 1 with the binder being previously applied, and collide with the surface of the base metal material 1. When being driven and colliding with the base metal material 1 in the shot peening, the different type metal grains 2 enter the binder 6 that is not cured or a cured binder, and intimately coupled to the surface of the base metal material 1 to form the different type metal film 3. In this method, the different type metal grains 2 are driven toward the surface of the base metal material 1 by not less than 0.3 MPa, preferably not less than 0.5 MPa of pressurized air. The pressure of the air can be selected depending on uncured/cured binder conditions. In the case where the pressurized air drives the different type metal grains toward an uncured binder, the pressure of the air can be lower than the case where the pressurized air drives the different type metal grains toward a cured binder. The reason is that the different type metal grains can smoothly enter the inside of an uncured binder, on the other hand large kinetic energy is required for the different type metal grains to enter the inside of a cured binder. Even cured, binders have hardness lower than the base metal material. Accordingly, when driven by the fluid, the different type metal grains can enter the inside of a cured binder, and can be intimately coupled to the surface of the base metal material.

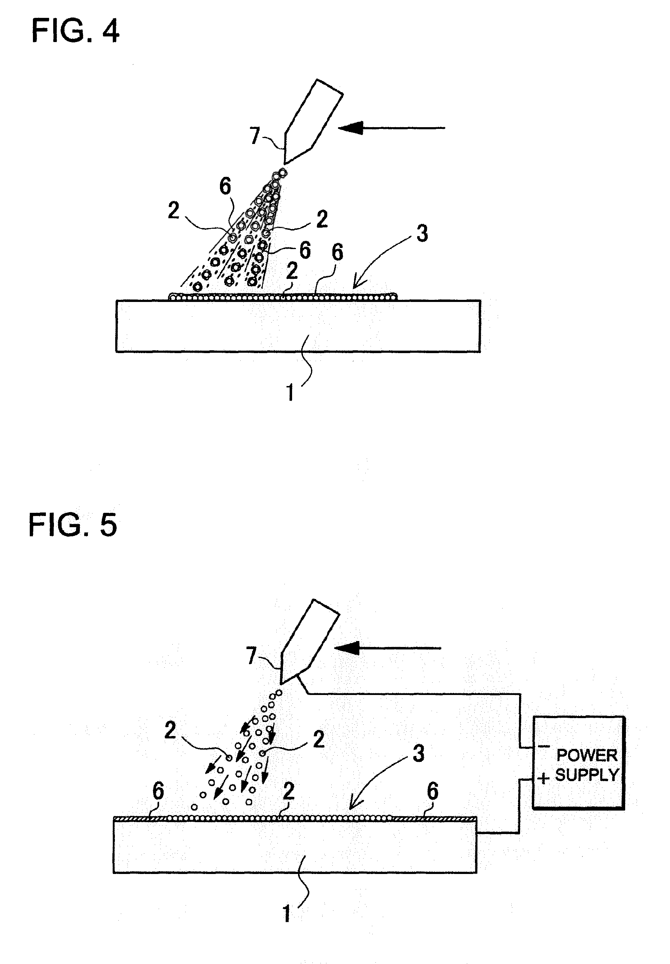

In order to drive the different type metal grains by using pressurized liquid, as shown in Fig. 4, the different type metal grains 2 are mixed to the binder 6 in the form of liquid or a paste, and the binder 6 containing the mixed different type metal grains 2 is pressurized and is discharged from a nozzle 7 so that the different type metal grains 2 collide with the surface of the base metal material 1. In the case where the different type metal grains 2 are driven toward the base metal material 1 together with the binder 6, since the different type metal grains 2 have a specific gravity larger than the binder 6, the different type metal grains 2 with kinetic energy higher than the binder 6 enter the binder 6 so that the different type metal grains 2 are adhered on the surface of the base metal material 1 to form the different type metal film 3.

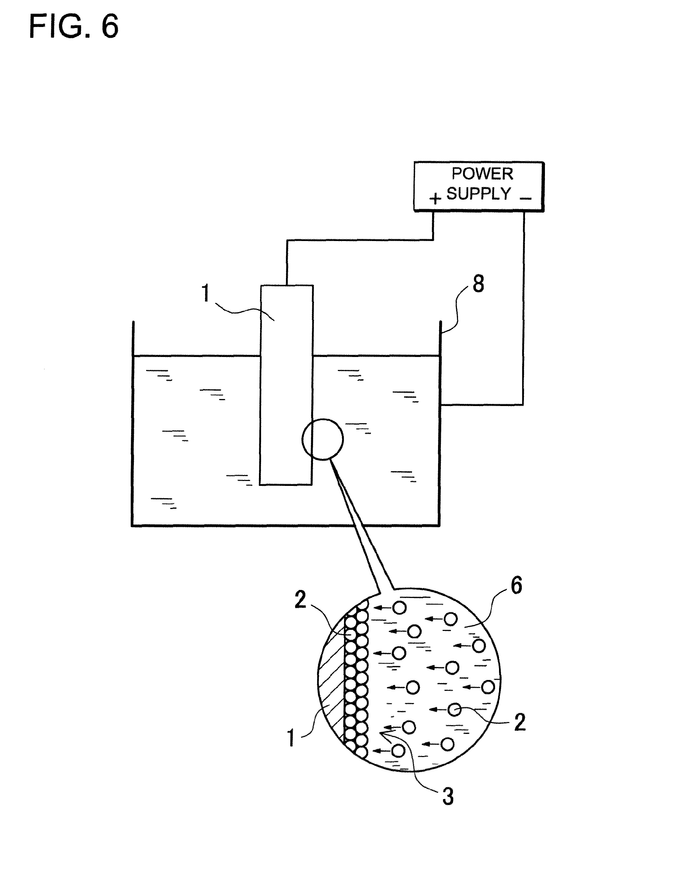

As shown in Figs. 5 and 6, the different type metal grains 2 are driven by an electric field, and collide with the surface of the base metal material 1. In a method shown in Fig. 5, a high voltage is applied between the different type metal grains 2 and the base metal material 1. The different type metal grains 2 are charged, and then the nozzle 7 discharges the charged different type metal grains 2. The charged different type metal grains 2 are driven by the electrostatic field, and collide with the base metal material 1. In this method, the different type metal grains 2 driven by the electric field collide with the surface of the base metal material 1 with the binder 6 being applied on the surface of the base metal material 1 with the binder 6 being uncured whereby forming the different type metal film 3. In this method, both of the binder and the different type metal grains may be driven by an electric field to collide with the surface of the base metal material whereby forming the different type metal film.

In the method shown in Fig. 6, the base metal material 1 is immersed in the binder 6 with the different type metal grains 2 mixed into the binder 6. A voltage is applied between an electrically conductive vessel 8 and the base metal material 1. The vessel 8 is filled with the binder 6. The different type metal grains 2 mixed into the binder 6 are charged, and driven toward the surface of the base metal material 1 by electrostatic force.

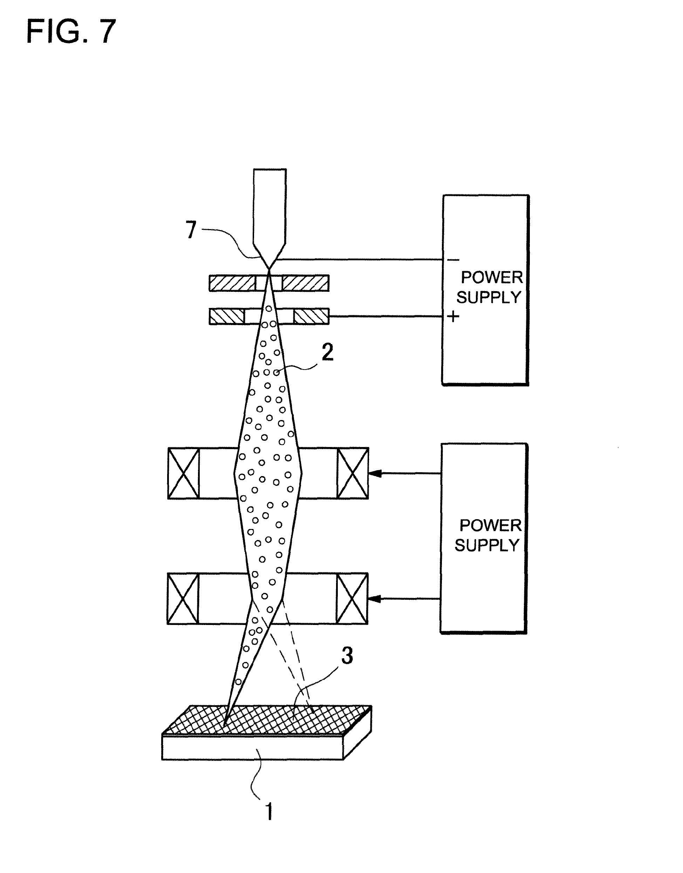

Also, Fig. 7 shows a method that drives the different type metal grains 2 toward the surface of the base metal material 1 by using a magnetic field so that the different type metal grains 2 collide with the surface of the base metal material 1. In this illustrated method, the different type metal grains 2 are driven by both electric and magnetic fields, and collide with the surface of the base metal material 1. In this illustrated method, the different type metal grains 2 are charged, and then the nozzle 7 discharges the charged different type metal grains 2. The discharged different type metal grains 2 are driven by the magnetic, and are focused on the surface of the base metal material 1 by the electric field to collide with the surface of the base metal material 1. According to this method, the different type metal grains 2 are discharged from the nozzle 7 and are then focused into a beam shape by the magnetic field to collide with the surface of the base metal material 1. Thus, the surface of the base metal material 1 can be scanned with the beam of the different type metal grains 2 so that the driven different type metal grains 2 collide with the entire surface of the base metal material 1.

The binder 6 can be removed by irradiation with an energy beam. In other words, the binder 6 serves to provisionally couple the different type metal grains 2 to the base metal material 1 prior to melting combination between the different type metal grains 2 and the base metal material 1 by the energy of an electron beam or laser beam. For this reason, the binder 6 is only required to couple the different type metal grains 2 to the base metal material 1 until the different type metal grains 2 and the base metal material 1 are melted and combined by the energy of an electron beam or laser beam. Although the binder 6 will be removed by the energy beam, all of the components of the binder are not required to be completely removed. Some components included in the binder (e.g., silicon) can remain as a component of an alloy of the different type metal grains and the base metal material after energy beam removal.

The binder 6 is water soluble or organic solvent soluble. For example, a sugar or cellulose group material can be used as the binder 6. More specifically, the binder 6 can be one material or a mixture of a plurality of materials selected from the group consisting of: a material such as gum Arabic, tragacanth, gum karaya, caramel, starch, soluble starch, dextrin, α-starch, sodium alginate, gelatin, locust bean gum and casein; a semi-synthetic material derived from a natural product, the material being any of lignosulfonate, carboxymethyl cellulose sodium salt, methyl cellulose, hydroxyethyl cellulose, sodium salt of carboxymethylated starch, hydroxy-ethylated starch, sodium salt of starch phosphate, hydroxypropyl cellulose, hydroxypropyl methyl cellulose, ethyl cellulose, acetyl cellulose, and ester gum; and a composite being any of polyvinyl alcohol, polyvinyl methyl ether, polyacrylamide, sodium salt of polyacrylic acid, water-soluble copolymer, copolymer of partially saponificated vinyl acetate and vinyl ether, acrylic acid, methacrylic acid, maleic acid and polymer or copolymer of maleic acid ester or salt, polyethylene glycol, polyethylene oxide, polyvinyl pyrrolidone, vinylpyrrolidone-vinyl acetate copolymer, polyvinyl acetate, coumarone resin, petroleum resin, and phenolic resin. Also, an irradiation-setting resin capable of being cured by ultraviolet irradiation can be used as the binder. Also, a liquid such as oil capable of adhering the different type metal grains can be used as the binder. A lubricating oil can provide a thick different type metal film when having a high viscosity, and can provide a thin different type metal film when having a low viscosity. Although, dissimilar to adhesives, oils are not cured, oils can adhere the different type metal grains on the surface of the base metal material by adhesiveness of the oils.

The binder can be a powdery material. In the provisional filming step, the powdery binder and the different type metal grains can be adhered on the surface of the base metal material by electrostatic force, and can be then heated so that the different type metal grains are coupled to the surface of the base metal material by the medium of the binder whereby forming the different type metal film. As this binder, a hot-melt adhesive binder is used that melts when heated. After melting when heated, the hot-melt adhesive binder is cooled and couples the different type metal grains to the surface of the base metal material. In the case where the powdery binder and the different type metal grains are driven toward the surface of the base metal material by electrostatic force, since the different type metal grains have a specific gravity larger than the binder, the different type metal grains have larger kinetic energy. For this reason, when grains of binder and the different type metal grains are driven by electrostatic force and are adhered on the surface of the base metal material, heavier different type metal grains enter the inside of the lighter binder and are intimately coupled to the surface of the base metal material to form different type metal film.

As for the different type metal film 3 coupled to the surface of the base metal material 1 by the medium of the binder 6, the film thickness of the different type metal film 3 can be controlled by the viscosity of the binder 6, and the film thickness of the applied binder 6. When the viscosity of the binder 6 is high, the film thickness of the different type metal film 3 can be thick. When the film thickness of the binder 6 is thick that is applied to the surface of the base metal material 1, the film thickness of the different type metal film 3 can be also thick. The viscosity of the binder 6 can be controlled by the amount of dilution by solvent. When the amount of dilution by solvent is large, the viscosity of the binder can be low.

In the provisional filming process, different type metal grains 2 that have a mean particle diameter of 0.03 µm to 500 µm can be driven toward the surface of the base metal material 1 to collide with the surface of the base metal material 1. The film thickness of the different type metal film 3 depends on the mean particle diameter of different type metal grains 2. As for the different type metal grains 2 to be discharged toward the base metal material 1, different type metal grains can be selected that have an optimum mean particle diameter in consideration of the film thickness of the different type metal film 3. The different type metal grains can preferably have a mean particle diameter in a range from not less than 0.1 µm, more preferably from not less than 0.3 µm, to not more than 50 µm, more preferably to not more than 10 µm.

Also, as the different type metal grains, grains may be used that includes carrier grains and fine metal grains adhered on the surface of the carrier grains. The carrier grains will not form the different type metal film. The fine metal grains will form the different type metal film. In such different type metal grains, the carrier grains can have a mean particle diameter of 100 µm to 1 mm, and the fine metal grains can have a mean particle diameter of 0.3 µm to 30 µm. In such different type metal grains, the fine metal grains can be small, in other words, the different type metal film can be thin, so that the thin different type metal film can be efficiently adhered on the surface of the base metal material. The reason is that the kinetic energy of large carrier grains is large, and as a result the fine metal grains collide with the surface of the base metal material at high momentum.

### [Provisional Filming Process by Vacuum Deposition]

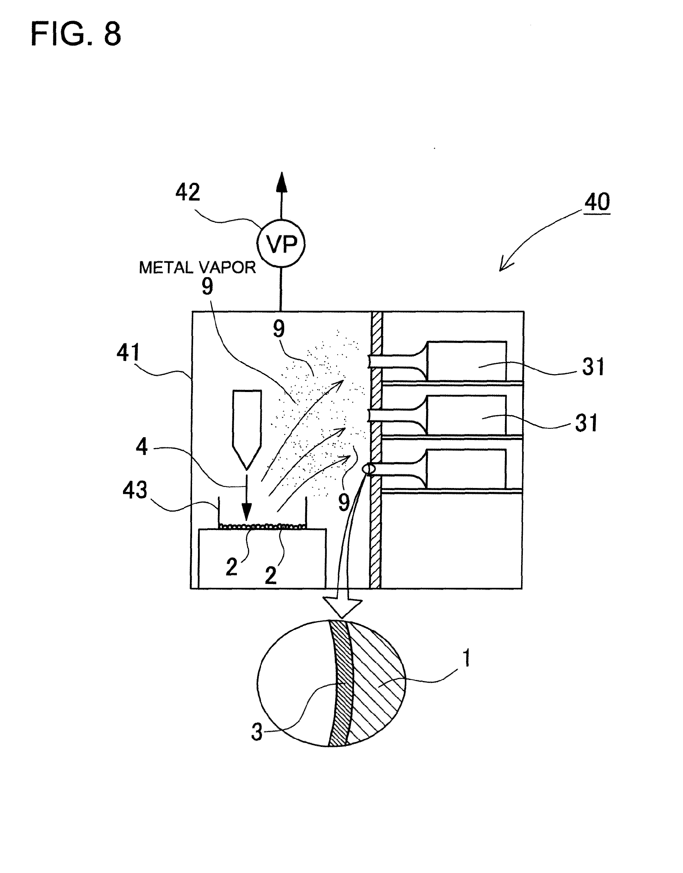

In a provisional filming process by a vacuum deposition apparatus 40 shown in Fig. 8, a tableting surface of a base metal material 1 is provided with a different type metal film 3 made of a different type metal of a metal different from the base metal material 1 by vacuum deposition so that the different type metal film 3 is formed on the surface of the base metal material 1. The vacuum deposition apparatus 40 shown in Fig. 8 airtightly seals a vacuum chamber 41. The vacuum chamber 41 accommodates the different type metal included in a crucible 43, and punches 31 or dies to be used as the base metal material 1. A vacuum pump 42 exhausts air from the vacuum chamber 41. For example, the degree of vacuum in the vacuum chamber 41 can be adjusted to a range from about 10⁻³ to 10⁻⁴ Pa. In this vacuum state, the different type metal is irradiated with an energy beam such as electron beam and laser beam to produce metal vapor 9 of the different type metal. The metal vapor 9 fills the vacuum chamber 41 and is adhered onto the surface of the base metal material 1 to be used as punches 31 or dies whereby forming the different type metal film 3. The energy of an energy beam for irradiation of the different type metal is adjusted to energy required to heat the different type metal to produce the metal vapor 9.

In this method, the different type metal grains 2 are made from powder of the plurality of different types of metals. The different type metal grains 2 can have a mean particle diameter of 1 µm to 3 mm. When the different type metal grains 2 are irradiated with the energy beam, the different type metal grains 2 are heated by the energy beam. Thus, the metal vapor 9 containing a plurality of different types of metals is produced, and is adhered onto the surface of the base metal material 1. For example, boron or sodium fluoride powder is mixed into molybdenum disulfide powder. The mixed powder is pressed, that is, formed into a tablet. This tablet is irradiated with the energy beam. Thus, metal vapor is produced that contains, in addition to sodium fluoride or molybdenum disulfide, boron. This metal vapor is adhered onto the surface of the base metal material. As a result, the different type metal film can be formed in that boron is mixed into sodium fluoride or molybdenum disulfide. In this method, since a plurality of different types of metal materials are not separately irradiated with energy beams, but are formed into a tablet and then irradiated with an energy beam to produce the metal vapor, it is possible to easily form a different type metal film that contains a plurality of types of metals on the surface of the base metal material. In addition, different type metal grains that are formed by this method have a feature in that a plurality of types of metals can be uniformly distributed.

In a method that adheres the different type metal to the surface of the base metal material 1 by using vacuum deposition, the different type metal is heated to produce the metal vapor 9 so that the produced metal vapor 9 is adhered onto the base metal material 1 to form the different type metal film 3. In this method, various types of metals can be used for the base metal material 1 and the different type metal grains 2.

In the vacuum disposition, a mixture of a plurality of types of different type metals can be used. The different type metal used in the vacuum disposition can be a metal that has a melting point lower than the base metal material. Conversely, the different type metal can be a metal that has a melting point higher than the base metal material. Also, the different type metals can be a mixture of two types of metals that have melting points lower and higher than the base metal material.

### [Beam Irradiation Process]

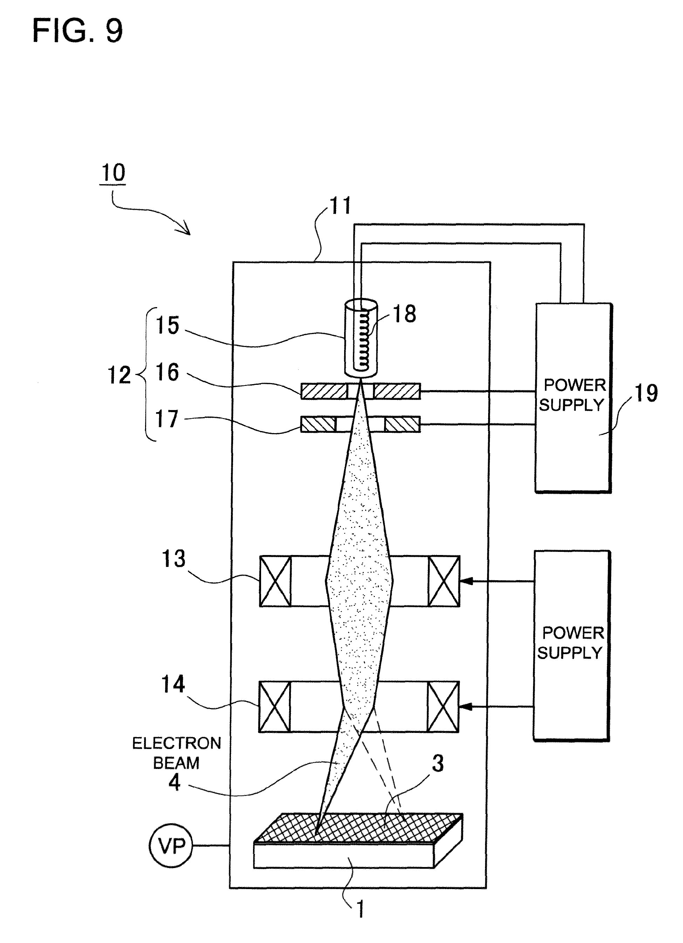

In this process, after the different type metal film 3 is formed on the surface of the base metal material 1, the base metal material 1 is irradiated with an electron beam or laser beam as energy beam to locally heat the different type metal film 3 by using the energy of the energy beam so that the different type metal film 3 and the base metal material 1 are combined. Fig. 9 shows an electron irradiation apparatus 10 used in the beam irradiation process. This electron irradiation apparatus 10 includes a sealed chamber 11 that accommodates the base metal material 1 with the different type metal film 3 being formed on the base metal material 1. A vacuum is produced in the sealed chamber 11. The base metal material 1 is irradiated with an electron beam 4. The sealed chamber 11 may be filled with a gas such as nitrogen gas in accordance with purposes to produce a gas atmosphere. The surface of the base metal material 1 is irradiated with the electron beam 4 at an optimum energy density to combine the different type metal film 3 and the base metal material 1. The electron irradiation apparatus 10 includes an electron gun 12 that heats a heater 18 to emit electrons, a focusing coil 13 that focuses a flow of electrons emitted from the electron gun 12 into the electron beam 4 by a magnetic field, and a deflection coil 14 that scans the surface of the base metal material 1 with the focused electron beam 4 by using a magnetic field.

The electron gun 12 includes a cathode 15, a bias electrode 16, and an anode 17. The cathode 15 emits the thermal electrons when the heater 18 is heated. The bias electrode 16 controls the number of the electrons emitted from the cathode 15 (i.e., the current value of the electron beam 4). The anode 17 drives the electron beam 4. A power supply 19 applies a negative voltage to the cathode 15 and the bias electrode 16, and a high positive voltage to the anode 17. The electron beam 4 emitted from the electron gun 12 is focused on the surface of the base metal material 1 to a spot with a predetermined area by the focusing coil 13. The base metal material 1 is scanned with the electron beam 4 by the deflection coil 14 so that the entire surface of the base metal material 1 is irradiated with the electron beam 4.

The energy of the electron beam 4 can be adjusted in accordance with the driving voltage of the anode 17, the current value of the electron beam 4 by the negative voltage of the bias electrode 16, and the scanning rate of the deflection coil 14. When the driving voltage of the anode 17 is high, the negative voltage of the bias electrode 16 is low, the area of the spot of the focused electron beam 4 is small, and the scanning rate of the electron beam 4 is low, the energy density of irradiation area can be high.

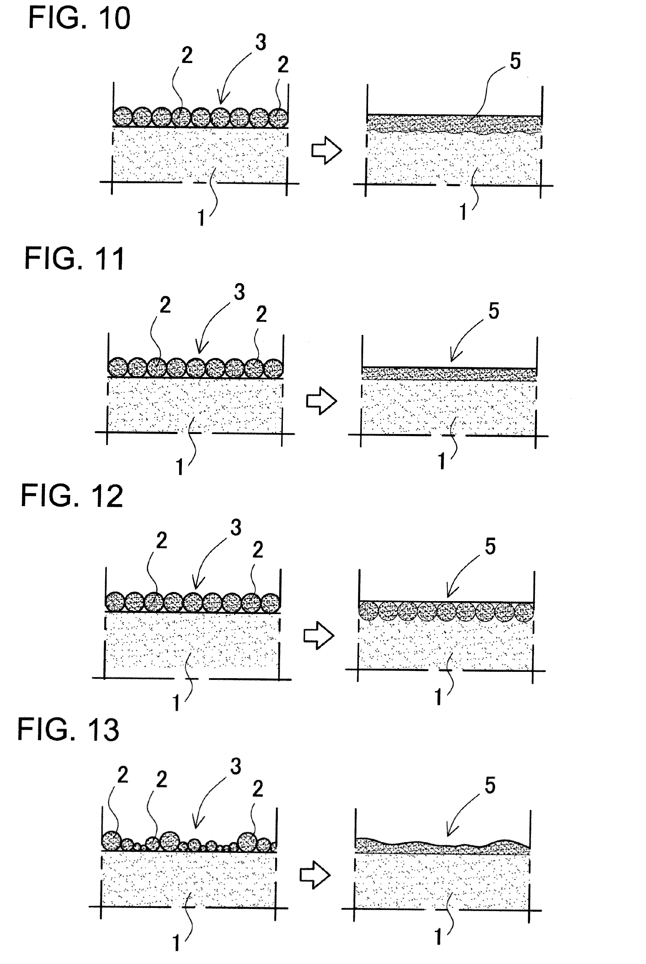

As for the electron beam 4 emitted by the electron irradiation apparatus 10 for irradiation of the surface of the base metal material 1, the energy of the electron beam 4 can be specified to an optimum value in accordance with the material and the film thickness of the different type metal film 3, and the type of base metal material 1. The energy of the electron beam is preferably specified to energy that combines the different type metal film 3 and the base metal material 1 to bring them into an alloy state. According to this method, as shown in Fig. 10, a tableting surface layer 5 is formed on the surface of the base metal material 1 with the different type metal film 3 and the base metal material 1 being combined and formed in an alloy state.

Also, in the case where a different type metal film 3 is formed of a different type metal that has a melting point lower than the base metal material 1, the energy of an electron beam 4 can be adjusted to energy that melts the different type metal film 3 to combine the different type metal film 3 and the base metal material 1 when the surface of the base metal material 1 is irradiated with the electron beam 4. According to this method, as shown in Fig. 11, the different type metal film 3 melts so that the different type metal film 3 and the surface of the base metal material 1 are combined whereby forming the tableting surface layer 5.

Also, in the case where a different type metal film 3 is formed of a different type metal that has a melting point higher than the base metal material 1, the energy of an electron beam irradiation can be adjusted to energy that melts the base metal material 1 to combine the different type metal film 3 and the base metal material 1 when the surface of the base metal material 1 is irradiated with the electron beam 4. According to this method, as shown in Fig. 12, the different type metal film 3 melts so that the different type metal film 3 is embedded into the surface of the base metal material 1, and the different type metal film 3 and the base metal material 1 are combined whereby forming the tableting surface layer 5.

Also, in the provisional filming process, as shown in Fig. 13, different type metal grains 2 that have different mean particle diameters can be discharged onto the surface of the base metal material 1. Thus, uneven different type metal film 3 can be formed. When this different type metal film 3 is irradiated with an electron beam, the different type metal film 3 and the base metal material 1 are combined so that the surface of the combined different type metal film 3 and the base metal material 1 is uneven. Thus, the tableting surface layer 5 is formed that has an uneven surface.

Although not illustrated, in the provisional filming process, a plurality of types of different type metal grains made of different types of metals can be discharged onto the surface of the base metal material so that a different type metal film formed of the different types of metals is formed. When this different type metal film is irradiated with an electron beam, the tableting surface layer formed of a plurality of types of metal grains can be formed on the surface of the base metal material.

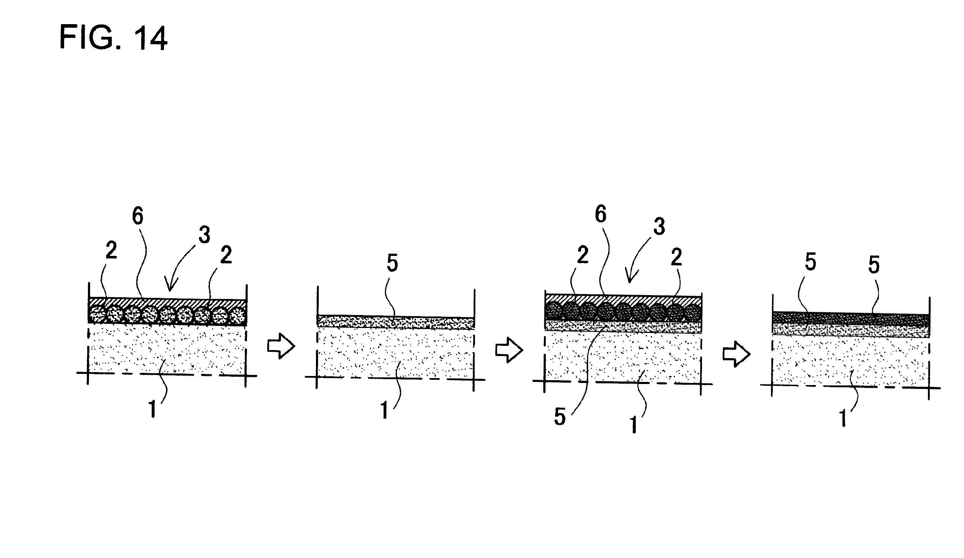

Furthermore, a surface treatment method according to the present invention can repeats the provisional filming process and the beam irradiation process a plurality of times to laminate a plurality of tableting surface layers 5 on the surface of the base metal material 1. In this method, as shown in Fig. 14, after the different type metal film 3 is formed on the surface of the base metal material 1 in the provisional filming process, the surface of the base metal material 1 is irradiated with an energy beam in the beam irradiation process to combine the different type metal film 3 and the base metal material 1 whereby forming the tableting surface layer 5 on the surface of the base metal material 1. After that, the different type metal film 3 is formed on the surface of this tableting surface layer 5 by the binder 6. Alternatively, the different type metal film is formed by vacuum deposition. Additionally, this different type metal film 3 is irradiated with an energy beam to combine the different type metal film 3 and the tableting surface layer 5. Thus, two layers of the tableting surface layer 5 are laminated on the surface of the base metal material 1. In addition, these processes can be repeated to laminate a multilayer structure of tableting surface layers on the surface of the base metal material. According to this method for laminating a plurality of tableting surface layers 5 on the surface of the base metal material 1, a thick film can be formed on the surface of the base metal material 1. The plurality of tableting surface layers 5 laminated on the surface of the base metal material 1 can be formed of the same type of metal or different types of metals. In a method for laminating the tableting surface layers formed of the same type of metal on the surface of the base metal material, a thick tableting surface layer formed of the same type of metal can be formed on the surface of the base metal material. In a method for laminating the tableting surface layers formed of the different types of metals on the surface of the base metal material, a plurality of tableting surface layers with different properties can be formed in a lamination structure on the surface of the base metal material.

According to the tableting surface treatment method of the present invention, since the aforementioned provisional filming and beam irradiation processes are repeated a plurality of times, it is possible to increase the entire film thickness of the tableting surface layer structure formed on the surface of the base metal material. Accordingly, this film thickness adjustment can provide surface treatment to metal surfaces of various types of products depending on their applications.

In the aforementioned methods, although the different type metal film 3 is irradiated with the electron beam 4 to combine the different type metal film 3 and the surface of the base metal maternal 1, the different type metal film may be irradiated with a laser beam instead of the electron beam to combine the different type metal film and on the surface of the base metal material. That is, the different type metal film and the surface of the base metal material can be combined by the energy of a laser beam instead of the energy of the electron beam. In the case of laser beam, one of or both of the different type metal grains and the base metal material are melted by the energy of electromagnetic waves instead of the energy of electrons so that the different type metal film and the surface of the base metal material are tightly combined.

### [Polishing Process]

In a polishing process, after the different type metal film and the base metal material are combined, the surface of the tableting surface layer is polished and smoothed. Although this polishing process is not an essential process in the present invention, in the case where the surface is adjusted to predetermined smoothness by polishing the tableting surface layer, the frictional resistance can be smaller. In addition, it is possible to reduce wear in a contact surface to be in contact with the tableting surface layer. In the polishing process, the tableting surface layer of the base metal material is subjected to shot blasting using polishing grains. The polishing grains can be fine powder of silicon carbide, silica, alumina, or mixed inorganic fine powder of them. In addition, the polishing grains can be metal grains containing any of W, C, B, Ti, Ni, Cr, Si, Mo, Ag, Au, Ba, Be, Ca, Co, Cu, Fe, F and fluoride, Mg, Mn, Nb, Pt, S and sulfide, Ta, and V. The mean diameter of the polishing grains used in the shot blasting in the polishing process is larger than 1 µm, and smaller than 50 µm.

In the polishing process, since the tableting surface layer is polished, the arithmetic mean roughness Ra of the surface of the tableting surface layer can be adjusted to an optimum value. A polishing method using the shot blasting can adjust the surface arithmetic mean roughness Ra after polishing in accordance with the particle diameter of the polish grains. When the particle diameter of the polish grains is small, the surface arithmetic mean roughness Ra after polishing will be small. Conversely, when the particle diameter of the polish grains is large, the surface arithmetic mean roughness Ra after polishing will be large. Also, since the surface arithmetic mean roughness Ra will be reduced by polishing, when the polishing amount is large, in other words when a surface to be polished is thickly polished, the surface arithmetic mean roughness Ra will be smaller.

The releasability of tablet depends on the arithmetic mean roughness Ra of the tableting surface. In order to improve the releasability of powdery medicine, the arithmetic mean roughness Ra of the tableting surface is specified to not less than 0.1 µm and not more than 5 µm. If the arithmetic mean roughness Ra of the tableting surface is less than 0.1 µm and more than 5 µm, the releasability of powdery medicine decreases. The surface polishing using shot blasting has a feature in that the arithmetic mean roughness Ra of the tableting surface and the polishing amount can be adjusted. However, the tableting surface layer polishing does not necessarily use shot blasting. The reason is that, the surface arithmetic mean roughness Ra can be also adjusted to an optimum value by buffing. In the case of buffing, the arithmetic mean roughness Ra of a surface to be polished can be adjusted in accordance with the material of a buff to be used and the buffing time.

After the surface is subjected to shot blasting and polished to be smoothed, the surface may be additionally subjected to shot peening for peer-like-surface finish of the tableting surface. The peer-like-surface-finished can improve the releasability of some types of tablets.

### EXAMPLES 1

### (1) Provisional Filming Process

The surface of a steel material (eg., SKD-11) as a base metal material 1 is subjected to shot peening using different type metal grains 2 that are formed of molybdenum disulfide. The mean particle diameter of the different type metal grains 2 is 10 µm. The discharging pressure in shot peening is 1 MPa. Thus, a different type metal film 3 of molybdenum disulfide is formed on the surface of the base metal material 1 by the shot peening.

### (2) Beam Irradiation Process

After the different type metal film 3 of molybdenum disulfide is formed on the surface of the base metal material 1, the base metal material 1 is accommodated in the sealed chamber 11. Air in the sealed chamber 11 is exhausted so that a vacuum is produced in the sealed chamber 11. The surface of the base metal material 1 is irradiated with an electron beam 4. The conditions of electron ray irradiation are specified as follows (in the case of a punch). The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 100 mA |
| Scanning Area of Electron Beam | φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from copper and molybdenum disulfide, and has excellent lubricity. In this tableting surface layer, iron and molybdenum disulfide form an alloy together, and are tightly combined. Accordingly, this tableting surface layer has extremely excellent lubricity and wear resistance as compared with surface treatment in that the surface of the base metal material 1 is subjected only to shot peening using molybdenum disulfide so that molybdenum disulfide is adhered onto the the surface of the base metal material 1.

In the case where the aforementioned provisional filming and beam irradiation processes are repeated a plurality of times, a thick tableting surface layer can be formed on the surface of the base metal material 1. The thick tableting surface layer is formed of molybdenum disulfide that forms an alloy together with iron of the base metal material 1, and tightly combines with iron of the base metal material 1.

### EXAMPLE 2

A base metal material is subjected to a surface treatment similar to Example 1 except that the tableting surface layer formed by the surface treatment according to Example 1 is polished to optimum smoothness by the following polishing process. Irradiation marks due to energy beam on the tableting surface layer are smoothed in the polishing process. In the polishing process, the tableting surface layer is subjected to shot blasting using polishing grains. Thus, the surface of the tableting surface layer is polished and smoothed. In first shot blasting of polishing process using shot blasting, silicon carbide grains with a mean diameter of 50 µm are discharged by air pressurized at 0.5 MPa. In the second shot blasting, silicon carbide grains with a mean diameter of 20 µm are discharged by air pressurized at 1.2 MPa. In third shot blasting, grains are used that have diamond powder adhered on the surfaces of plastic grains. The grains are discharged by air pressurized at 1 MPa.

Ra of the polished tableting surface layer is 0.25 µm. The friction coefficient of its surface is 0.27 in ball-on-disk abrasion test. This value is very small, and is comparable to the value 0.2 of DLC. It is said that DLC has the smallest friction coefficient.

The ball-on-disk abrasion test is conducted as shown in Fig. 15 under the following conditions.

### [Measurement Conditions]

| | |
|---|---|
| Slide Speed | 0.1 m/sec |
| Load | 5 N |
| Measurement Time | 900 sec |
| Contact Steel Ball | SUJ2 (3/8 inch) |
| EXAMPLE 3 | |

### (1) Provisional Filming Process

A Ti surface of as a base metal material 1 is subjected to shot peening using different type metal grains 2 of tungsten. The mean particle diameter of the different type metal grains 2 of tungsten is 20 µm. The discharging pressure in shot peening is 1 MPa. Thus, a different type metal film 3 of tungsten is formed on the surface of the base metal material 1 by the shot peening.

### (2) Beam Irradiation Process

After the different type metal film 3 of tungsten is formed on the surface of the base metal material 1, the base metal material 1 is accommodated in the sealed chamber 11. Air in the sealed chamber 11 is exhausted so that a vacuum is produced in the sealed chamber 11. The surface of the base metal material 1 is irradiated with an electron beam 4. The conditions of electron ray irradiation are specified as follows. The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 110 mA |
| Scanning Area of Electron Beam | φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from titanium and tungsten, and has excellent wear resistance. In this tableting surface layer, tungsten and titanium form an alloy together, and are tightly combined. Accordingly, this tableting surface layer has extremely excellent wear resistance as compared with surface treatment in that the surface of the base metal material 1 is subjected to only shot peening using tungsten so that tungsten is adhered onto the surface of the base metal material 1.

Also, in this method, in the case where the aforementioned provisional filming and beam irradiation processes are repeated a plurality of times, a thick tableting surface layer can be formed on the surface of the base metal material 1. The thick tableting surface layer is formed of tungsten that forms an alloy together with titanium of the base metal material, and tightly combines with titanium of the base metal material.

### EXAMPLE 4

A base metal material is subjected to a surface treatment similar to Example 3 except that the tableting surface layer formed by the surface treatment according to Example 3 is polished to optimum smoothness by a polishing process similar to Example 2. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 5

### (1) Provisional Filming Process

SKD-11 is used as a base metal material 1, and is subjected to shot peening using different type metal grains 2 of SiC. The mean particle diameter of the different type metal grains 2 is 3 µm. The discharging pressure in shot peening is 1 MPa. Thus, a different type metal film 3 of SiC is formed on the surface of the base metal material 1 by the shot peening.

### (2) Beam Irradiation Process

After the different type metal film 3 of SiC is formed on the surface of the base metal material 1, the base metal material 1 is accommodated in the sealed chamber 11. Air in the sealed chamber 11 is exhausted so that a vacuum is produced in the sealed chamber 11. The surface of the base metal material 1 is irradiated with an electron beam 4. The conditions of electron ray irradiation are specified as follows. The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 100 A |
| Scanning Area of Electron Beam | φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from SKD-11 and SiC. The friction coefficients of the tableting surface layer and SKD-11 as the base metal material are measured by the ball-on disk test method. The ratio of the friction coefficients of the base metal material and the thus-formed tableting surface layer is 1:0.3. This result shows that the tableting surface layer has a low friction coefficient.

### EXAMPLE 6

A base metal material is subjected to a surface treatment similar to Example 5 except that the tableting surface layer formed by the surface treatment according to Example 5 is polished to optimum smoothness by a polishing process similar to Example 2. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 7

### (1) Provisional Filming Process

A binder in the form of a paste is applied to the surface of a base metal material formed of tool steel (SKD-11). Gum arabic is used as the binder. The surface of the base metal material is subjected to shot peening using molybdenum disulfide powder as different type metal grains with the binder being uncured. The molybdenum disulfide powder used in the shot peening is driven toward the surface of the base metal material by pressurized air, and collides with the surface of the base metal material of tool steel to form a different type metal film. The different type metal grains of molybdenum disulfide powder have a mean particle diameter of about 10 µm. The air pressure in the shot peening is 0.1 MPa. Subsequently, the binder is cured. The different type metal film of molybdenum disulfide with film thickness of 200 µm is formed on the surface of the base metal material 1 in this provisional filming process.

### (2) Beam Irradiation Process

After the binder is cured, the sealed chamber accommodates the base metal material with the different type metal film of molybdenum disulfide being formed. Air in the sealed chamber is exhausted so that a vacuum is produced in the sealed chamber. The surface of the base metal material is irradiated with an electron beam. The conditions of electron ray irradiation are specified as follows. The degree of vacuum of the sealed chamber is not more than 7 Pa.

| | |
|---|---|
| Diameter of Electron Beam Spot | 0.3 mm |
| Driving Voltage | 30 kV |
| Beam Current | 100 mA |
| Scanning Area of Electron Beam | φ10 |
| Entire Scanning Time | 5 seconds |

The surface of the base metal material is scanned with the electron beam in parallel so that the entire scanning area of the base metal material is uniformly irradiated with the electron beam. Thus, molybdenum disulfide and tool steel (SKD-11) are melted and combined. As a result, a tableting surface layer of molybdenum disulfide with excellent lubricity is formed on the surface of the base metal material. After that, different type metal grains are scraped and removed that fly out of the surface in electron beam irradiation and are then adhered on the surface. Thus, the surface roughness is adjusted.

According to the aforementioned processes, the tableting surface layer of molybdenum disulfide with thickness of about 10 µm is formed. In this tableting surface layer, metal of SKD-11 and molybdenum disulfide form an alloy together, and are tightly combined. Accordingly, this tableting surface layer has a very small friction coefficient and extremely excellent wear resistance. In the tool steel subjected to the surface treatment according to the aforementioned method, the tableting surface layer can be extremely tightly combined as compared with a method in that molybdenum disulfide is subjected only to shot peening. The tableting surface layer subjected to the surface treatment according to the aforementioned method has a very small surface friction coefficient.

### EXAMPLE 8

A base metal material is subjected to a surface treatment similar to Example 7 except that the tableting surface layer formed by the surface treatment according to Example 7 is polished to optimum smoothness by a polishing process similar to Example 2. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 9

Except that tungsten disulfide is used as the different type metal grains instead of molybdenum disulfide, the tableting surface layer of tungsten disulfide with a thickness of about 10 µm is formed on the surface of the base metal material similarly to Example 7. In this tableting surface layer, metal of SKD-11 and tungsten disulfide form an alloy together, and are tightly combined. Accordingly, this tableting surface layer has a very small friction coefficient and extremely excellent wear resistance. In the tool steel subjected to the surface treatment according to the aforementioned method, the tableting surface layer can be extremely tightly combined as compared with a method in that tungsten disulfide is subjected only to shot peening. The tableting surface layer subjected to the surface treatment according to the aforementioned method has a very small surface friction coefficient.

### EXAMPLE 10

A base metal material is subjected to a surface treatment similar to Example 9 except that the tableting surface layer formed by the surface treatment according to Example 9 is polished to optimum smoothness by a polishing process similar to Example 2. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 11

Except that boron nitride is used as the different type metal grains instead of molybdenum disulfide, the tableting surface layer of boron nitride with a thickness of about 10 µm is formed on the surface of the tool steel similarly to Example 7. Also, in this tableting surface layer, metal of SKD-11 and boron nitride form an alloy together, and are tightly combined. Accordingly, this tableting surface layer has a very small friction coefficient and extremely excellent wear resistance. In the tool steel subjected to the surface treatment according to the aforementioned method, the tableting surface layer can be extremely tightly combined as compared with a method in that boron nitride is subjected only to shot peening. The tableting surface layer subjected to the surface treatment according to the aforementioned method also has a very small surface friction coefficient.

### EXAMPLE 12

A base metal material is subjected to a surface treatment similar to Example 11 except that the tableting surface layer formed by the surface treatment according to Example 11 is polished to optimum smoothness by a polishing process similar to Example 2. Irradiation marks due to energy beam on the tableting surface layer are smoothed in the polishing process. Thus, Ra of the polished tableting surface layer is 0.25 µm. The friction coefficient of its surface is 0.3. This value is small, and is close to the value 0.2 of DLC. It is said that DLC has the smallest friction coefficient.

### EXAMPLE 13

Except that the base metal material is irradiated with laser beam instead of an electron beam, the tableting surface layer of boron nitride with a thickness of about 10 µm is formed on the tableting surface of the base metal material similarly to Example 11. Also, in this tableting surface layer, metal of SKD-11 and boron nitride are melted to form an alloy together, and are tightly combined. Accordingly, this tableting surface layer has extremely excellent lubricity and wear resistance as compared with surface treatment in that the surface of the base metal material 1 is subjected to only shot peening using boron nitride so that boron nitride is adhered onto the surface of the base metal material.

### EXAMPLE 14

Punches and dies subjected to the surface treatment according to Example 12 are set to an 18-pair rotary type tableting apparatus to form the aforementioned medicine of the following formula without any lubricants at all into a tablet by using a direct dry-tabletting method. After 2000 tablets are formed, the medicine is not adhered on the punches, and the tablets are finely formed.

### Composition of Medicine

| | |
|---|---|
| Ibuprofen | 50% by weight |
| Hydroxypropyl Starch | 30% by weight |
| Synthetic Aluminum Silicate | 10 % of the weight |
| Microcrystalline cellulose | 10% by weight |

The thus-formed tablets are fast disintegrating tablets that disintegrate in oral cavity within 30 seconds.

Although, in the foregoing example, the different type metal grains are adhered onto the surface of the base metal material by the binder to form the different type metal film, subsequently the different type metal film is irradiated with an energy beam so that the tableting surface layer is formed, after that the tableting surface layer is polished in the polish process, the present invention is not limited to a method using the binder. The different type metal grains can be adhered onto the surface of the base metal material by using shot peening, subsequently the base metal material can be irradiated with an energy beam of electron rays or a laser beam to form the tableting surface layer, after that irradiation marks due to the irradiation of the energy beam can be polished whereby adjusting the degree of smoothness of the tableting surface layer to an optimum value.

### EXAMPLE 15

### (1) Provisional Filming Process

The surface of a steel material (e.g., SKD-11) as a base metal material 1 is subjected to shot peening using different type metal grains 2 that are formed of sodium fluoride. The mean particle diameter of the different type metal grains 2 is 10 µm. The discharging pressure in shot peening is 1 MPa. Thus, a different type metal film 3 of sodium fluoride is formed on the surface of the base metal material 1 by the shot peening.

### (2) Beam Irradiation Process

After the different type metal film 3 of sodium fluoride is formed on the surface of the base metal material 1, the base metal material 1 is accommodated in the sealed chamber 11. Air in the sealed chamber 11 is exhausted so that a vacuum is produced in the sealed chamber 11. The surface of the base metal material 1 is irradiated with an electron beam 4. The conditions of ray electron irradiation are specified as follows (in the case of a punch). The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 100 mm |
| Scanning Area of Electron Beam | Φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from iron and sodium fluoride, and has excellent lubricity. In this tableting surface layer, iron and sodium fluoride form an alloy together, and are tightly combined. Accordingly, this tableting surface layer has extremely excellent lubricity and wear resistance as compared with surface treatment in that the surface of the base metal material 1 is subjected only to shot peening using sodium fluoride so that sodium fluoride is adhered onto the the surface of the base metal material 1.

In the case where the aforementioned provisional filming and beam irradiation processes are repeated a plurality of times, a thick tableting surface layer can be formed on the surface of the base metal material 1. The thick tableting surface layer is formed of sodium fluoride that forms an alloy together with iron of the base metal material 1, and tightly combines with iron of the base metal material 1.

### EXAMPLE 16

A base metal material is subjected to a surface treatment similar to Example 15 except that the tableting surface layer formed by the surface treatment according to Example 15 is polished to optimum smoothness by the following polishing process. Irradiation marks due to energy beam on the tableting surface layer are smoothed in the polishing process. In the polishing process, the tableting surface layer is subjected to shot blasting using polishing grains. Thus, the surface of the tableting surface layer is polished and smoothed. In first shot blasting of polishing process using shot blasting, silicon carbide grains with a mean diameter of 50 µm are discharged by air pressurized at 0.5 MPa. In the second shot blasting, silicon carbide grains with a mean diameter of 20 µm are discharged by air pressurized at 1.2 MPa. In third shot blasting, grains are used that have diamond powder adhered on the surfaces of plastic grains. The grains are discharged by air pressurized at 1 MPa.

Ra of the polished tableting surface layer is 0.25 µm. The friction coefficient of its surface is 0.27 in ball-on-disk abrasion test. This value is very small, and is comparable to the value 0.2 of DLC. It is said that DLC has the smallest friction coefficient.

The ball-on-disk abrasion test is conducted as shown in Fig. 15 under the following conditions.

### [Measurement Conditions]

| | |
|---|---|
| Slide Speed | 0.1 m/sec |
| Load | 5 N |
| Measurement Time | 900 sec |
| Contact Steel Ball | SUJ2 (3/8 inch) |

### EXAMPLE 17

### (1) Provisional Filming Process

A Ti surface of as a base metal material 1 is subjected to shot peening using different type metal grains 2 of magnesium stearate. The mean particle diameter of the different type metal grains 2 of magnesium stearate is 20 µm. The discharging pressure in shot peening is 1 MPa. Thus, a different type metal film 3 of magnesium stearate is formed on the surface of the base metal material 1 by the shot peening.

### (2) Beam Irradiation Process

After the different type metal film 3 of magnesium stearate is formed on the surface of the base metal material 1, the base metal material 1 is accommodated in sealed chamber 11. Air in the sealed chamber 11 is exhausted so that a vacuum is produced in the sealed chamber 11. The surface of the base metal material 1 is irradiated with an electron beam 4. The conditions of ray electron irradiation are specified as follows. The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 110 mA |
| Scanning Area of Electron Beam | Φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from titanium and magnesium stearate, and has excellent wear resistance. In this tableting surface layer, magnesium stearate and titanium form an alloy together, and are tightly combined. Accordingly, this tableting surface layer has extremely excellent wear resistance as compared with surface treatment in that the surface of the base metal material 1 is subjected to only shot peening using magnesium stearate so that magnesium stearate is adhered onto the surface of the base metal material 1.

Also, in this method, in the case where the aforementioned provisional filming and beam irradiation processes are repeated a plurality of times, a thick tableting surface layer can be formed on the surface of the base metal material 1. The thick tableting surface layer is formed of magnesium stearate that forms an alloy together with titanium of the base metal material, and tightly combines with titanium of the base metal material.

### EXAMPLE 18

A base metal material is subjected to a surface treatment similar to Example 17 except that the tableting surface layer formed by the surface treatment according to Example 17 is polished to optimum smoothness by a polishing process similar to Example 16. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 19

### (1) Provisional Filming Process

SKD-11 is used as a base metal material 1, and is subjected to shot peening using different type metal grains 2 of potassium fluoride. The mean particle diameter of the different type metal grains 2 is 3 µm. The discharging pressure in shot peening is 1 MPa. Thus, a different type metal film 3 of potassium fluoride is formed on the surface of the base metal material 1 by the shot peening.

### (2) Beam Irradiation Process

After the different type metal film 3 of potassium fluoride is formed on the surface of the base metal material 1, the base metal material 1 is accommodated in the sealed chamber 11. Air in the sealed chamber 11 is exhausted so that a vacuum is produced in the sealed chamber 11. The surface of the base metal material 1 is irradiated with an electron beam 4. The conditions of electron ray irradiation are specified as follows. The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 100 mA |
| Scanning Area of Electron Beam | Φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from SKD-11 and potassium fluoride. The friction coefficients of the tableting surface layer and SKD-11 as the base metal material are measured by the ball-on disk test method. The ratio of the friction coefficients of the base metal material and the thus-formed tableting surface layer is 1:0.3. This result shows that the tableting surface layer has a low friction coefficient.

### EXAMPLE20

A base metal material is subjected to a surface treatment similar to Example 19 except that the tableting surface layer formed by the surface treatment according to Example 19 is polished to optimum smoothness by a polishing process similar to Example 16. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 21

### (1) Provisional Filming Process

A binder in the form of a paste is applied to the surface of a base metal material formed of tool steel (SKD-11). Gum arabic is used as the binder. The surface of the base metal material is subjected to shot peening using sodium fluoride powder as different type metal grains with the binder being uncured. The sodium fluoride powder used in shot peening is driven toward the surface of the base metal material by pressurized air, and collides with the surface of the base metal material of tool steel to form a different type metal film. The different type metal grains of sodium fluoride powder have a mean particle diameter of about 10 µm. The air pressure in the shot peening is 0.1 MPa. Subsequently, the binder is cured. The different type metal film of sodium fluoride with film thickness of 200 µm is formed on the surface of the base metal material 1 in this provisional filming process.

### (2) Beam Irradiation Process

After the binder is cured, the sealed chamber accommodates the base metal material with the different type metal film of sodium fluoride being formed. Air in the sealed chamber is exhausted so that a vacuum is produced in the sealed chamber. The surface of the base metal material is irradiated with an electron beam. The conditions of electron ray irradiation are specified as follows. The degree of vacuum of the sealed chamber is not more than 7 Pa.

| | |
|---|---|
| Diameter of Electron Beam Spot | 0.3 mm |
| Driving Voltage | 30 kV |
| Beam Current | 100mA |
| Scanning Area of Electron Beam | Φ10 |
| Entire Scanning Time | 5 seconds |

The surface of the base metal material is scanned with the electron beam in parallel so that the entire scanning area of the base metal material is uniformly irradiated with the electron beam. Thus, sodium fluoride and tool steel (SKD-11) are melted and combined. As a result, a tableting surface layer of sodium fluoride with excellent lubricity is formed on the surface of the base metal material. After that, different type metal grains are scraped and removed that fly out of the surface in electron beam irradiation and are then adhered on the surface. Thus, the surface roughness is adjusted.

According to the aforementioned processes, the tableting surface layer of sodium fluoride with thickness of about 10 µm is formed. In this tableting surface layer, metal of SKD-11 and sodium fluoride form an alloy together, and are tightly combined. Accordingly, this tableting surface layer has a very small friction coefficient and extremely excellent wear resistance. In the tool steel subjected to the surface treatment according to the aforementioned method, the tableting surface layer can be extremely tightly combined as compared with a method in that sodium fluoride is subjected only to shot peening. The tableting surface layer subjected to the surface treatment according to the aforementioned method has a very small surface friction coefficient.

### EXAMPLE 22

A base metal material is subjected to a surface treatment similar to Example 21 except that the tableting surface layer formed by the surface treatment according to Example 21 is polished to optimum smoothness by a polishing process similar to Example 16. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DOC has the smallest friction coefficient.

### EXAMPLE 23

Except that magnesium stearate is used as the different type metal grains instead of sodium fluoride, the tableting surface layer of magnesium stearate with a thickness of about 10 µm is formed on the surface of the base metal material similarly to Example 21. In this tableting surface layer, metal of SKD-11 and magnesium stearate form an alloy together, and are tightly combined. Accordingly, this tableting surface layer has a very small friction coefficient and extremely excellent wear resistance. In the tool steel subjected to the surface treatment according to the aforementioned method, the tableting surface layer can be extremely tightly combined as compared with a method in that magnesium stearate is subjected only to shot peening. The tableting surface layer subjected to the surface treatment according to the aforementioned method also has a very small surface friction coefficient.

### EXAMPLE 24

A base metal material is subjected to a surface treatment similar to Example 23 except that the tableting surface layer formed by the surface treatment according to Example 23 is polished to optimum smoothness by a polishing process similar to Example 16. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 25

Except that potassium fluoride is used as the different type metal grains instead of sodium fluoride, the tableting surface layer of potassium fluoride with a thickness of about 10 µm is formed on the surface of the tool steel similarly to Example 21. Also, in this tableting surface layer, metal of SKD-11 and potassium fluoride form an alloy together, and are tightly combined. Accordingly, this tableting surface layer has a very small friction coefficient and extremely excellent wear resistance. In the tool steel subjected to the surface treatment according to the aforementioned method, the tableting surface layer can be extremely tightly combined as compared with a method in that potassium fluoride is subjected only to shot peening. The tableting surface layer subjected to the surface treatment according to the aforementioned method also has a very small surface friction coefficient.

### EXAMPLE 26

A base metal material is subjected to a surface treatment similar to Example 25 except that the tableting surface layer formed by the surface treatment according to Example 25 is polished to optimum smoothness by a polishing process similar to Example 16. Irradiation marks due to energy beam on the tableting surface layer are smoothed in the polishing process. Thus, Ra of the polished tableting surface layer is 0.25 µm. The friction coefficient of its surface is 0.3. This value is small, and is close to the value 0.2 of DLC. It is said that DLC has the smallest friction coefficient.

### EXAMPLE 27

Except that the base metal material is irradiated with laser beam instead of an electron beam, the tableting surface layer of potassium fluoride with a thickness of about 10 µm is formed on the tableting surface of the base metal material similarly to Example 25. Also, in this tableting surface layer, metal of SKD-11 and potassium fluoride are melted to form an alloy together, and are tightly combined. Accordingly, this tableting surface layer has extremely excellent lubricity and wear resistance as compared with surface treatment in that the surface of the base metal material 1 is subjected to only shot peening using potassium fluoride so that potassium fluoride is adhered onto the surface of the base metal material.

### EXAMPLE 28

### (1) Provisional Filming Process

A different type metal of sodium fluoride is coated on the surface of a steel material (e.g., SKD-11) as a base metal material 1 by vacuum deposition. Thus, a different type metal film 3 of sodium fluoride is formed on the surface of the base metal material 1 by the vacuum deposition. In the vacuum deposition, as shown in Fig. 8, the vacuum chamber 41 accommodates base metal material 1 and sodium fluoride, and is then brought into a vacuum of 10⁻³ to 10⁻⁴ Pa. Subsequently, the sodium fluoride is irradiated with an electron beam 4, and is vaporized into metal vapor 9. The metal vapor 9 is adhered onto the surface of the base metal material 1 to form the different type metal film 3. The conditions of electron beam irradiation are specified as follows.

| | |
|---|---|
| Diameter of Electron Beam Spot | 0.3 mm |
| Driving Voltage | 30 kV |
| Beam Current | 100 mA |

### (2) Beam Irradiation Process

After the different type metal film 3 of sodium fluoride is formed on the surface of the base metal material 1, the base metal material 1 is accommodated in the sealed chamber 11. Air in the sealed chamber 11 is exhausted so that a vacuum is produced in the sealed chamber 11. The surface of the base metal material 1 is irradiated with the electron beam 4. The conditions of ray electron irradiation are specified as follows (in the case of a punch). The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 100 mA |
| Scanning Area of Electron Beam | Φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from iron and sodium fluoride, and has excellent lubricity. In this tableting surface layer, iron and sodium fluoride form an alloy together, and are tightly combined. Accordingly, this tableting surface layer has extremely excellent lubricity and wear resistance as compared with surface treatment in that the surface of the base metal material 1 is subjected only to shot peening using sodium fluoride so that sodium fluoride is adhered onto the the surface of the base metal material 1.

In the case where the aforementioned provisional filming and beam irradiation processes are repeated a plurality of times, a thick tableting surface layer can be formed on the surface of the base metal material 1. The thick tableting surface layer is formed of sodium fluoride that forms an alloy together with iron of the base metal material 1, and tightly combines with iron of the base metal material 1.

### EXAMPLE 29

A base metal material is subjected to the surface treatment similar to Example 28 except that the tableting surface layer formed by the surface treatment according to Example 28 is polished to optimum smoothness by the following polishing process. Irradiation marks due to energy beam on the tableting surface layer are smoothed in the polishing process. In the polishing process, the tableting surface layer is subjected to shot blasting using polishing grains. Thus, the surface of the tableting surface layer is polished and smoothed. In first shot blasting of polishing process using shot blasting, silicon carbide grains with a mean diameter of 20 µm are discharged by air pressurized at 1.2 MPa. In second shot blasting, grains are used that have diamond powder adhered on the surfaces of plastic grains. The grains are discharged by air pressurized at 1 MPa.

Ra of the polished tableting surface layer is 0.25 µm. The friction coefficient of its surface is 0.27 in ball-on-disk abrasion test. This value is very small, and is comparable to the value 0.2 of DLC. It is said that DLC has the smallest friction coefficient.

### EXAMPLE 30

### (1) Provisional Filming Process

A different type metal of molybdenum disulfide is coated on a Ti surface of a base metal material 1 by vacuum deposition. In the vacuum deposition, except that molybdenum disulfide is used instead of sodium fluoride, a different type metal film 3 of molybdenum disulfide is formed on the surface of the base metal material 1 similarly to Example 28.

### (2) Beam Irradiation Process

After the different type metal film 3 of molybdenum disulfide is formed on the surface of the base metal material 1, the base metal material 1 is accommodated in sealed chamber 11. Air in the sealed chamber 11 is exhausted so that a vacuum is produced in the sealed chamber 11. The surface of the base metal material 1 is irradiated with an electron beam 4. The conditions of electron ray irradiation are specified as follows. The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 110 mA |
| Scanning Area of Electron Beam | Φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1, The tableting surface layer is formed of an alloy formed from titanium and molybdenum disulfide, and has excellent wear resistance. In this tableting surface layer, molybdenum disulfide and titanium form an alloy together, and are tightly combined. Accordingly, this tableting surface layer has extremely excellent and wear resistance as compared with surface treatment in that the surface of the base metal material 1 is subjected only to shot peening using molybdenum disulfide so that molybdenum disulfide is adhered onto the surface of the base metal material 1.

Also, in this method, in the case where the aforementioned provisional filming and beam irradiation processes are repeated a plurality of times, a thick tableting surface layer can be formed on the surface of the base metal material 1. The thick tableting surface layer is formed of molybdenum disulfide that forms an alloy together with titanium of the base metal material, and tightly combines with titanium of the base metal material.

### EXAMPLE 31

A base metal material is subjected to a surface treatment similar to Example 30 except that the tableting surface layer formed by the surface treatment according to Example 30 is polished to optimum smoothness by a polishing process similar to Example 29. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 32

### (1) Provisional Filming Process

Except that SKD-11 is used as a base metal material 1, and a tablet for different type metal grains is used that is mixed powder of boron nitride and sodium fluoride, a different type metal film 3 of sodium fluoride and boron nitride is formed on the surface of the base metal material 1 by vacuum deposition similarly to Example 28.

### (2) Beam Irradiation Process

After the different type metal film 3 of sodium fluoride and boron nitride is formed on the surface of the base metal material 1, the base metal material 1 is accommodated in the sealed chamber 11. Air in the sealed chamber 11 is exhausted so that a vacuum is produced in the sealed chamber 11. The surface of the base metal material 1 is irradiated with an electron beam 4. The conditions of electron ray irradiation are specified as follows. The degree of vacuum of the sealed chamber 11 is not more than 7 Pa.

| | |
|---|---|
| Diameter of Electron Beam Spot | 0.3 mm |
| Driving Voltage | 30 kV |
| Beam Current | 110 mA |
| Scanning Area of Electron Beam | Φ10 |
| Entire Scanning Time | 5 seconds |

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from SKD-11, sodium fluoride and the boron nitride. The friction coefficients of the tableting surface layer and SKD-11 as the base metal material are measured by the ball-on disk test method. The ratio of the friction coefficients of the base metal material and the thus-formed tableting surface layer is 1:0.3. This result shows that the tableting surface layer has a low friction coefficient.

### EXAMPLE 33

A base metal material is subjected to a surface treatment similar to Example 32 except that the tableting surface layer formed by the surface treatment according to Example 32 is polished to optimum smoothness by a polishing process similar to Example 29. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC has the smallest friction coefficient.

### EXAMPLE 34

### (1) Provisional Filming Process

A different type metal of magnesium stearate is coated on a Ti surface of a base metal material 1 by vacuum deposition. In the vacuum deposition, except that magnesium stearate is used instead of sodium fluoride, a different type metal film 3 of magnesium stearate is formed on the surface of the base metal material 1 similarly to Example 28.

### (2) Beam Irradiation Process

After the different type metal film 3 of magnesium stearate is formed on the surface of the base metal material 1, the base metal material 1 is accommodated in sealed chamber 11. Air in the sealed chamber 11 is exhausted so that a vacuum is produced in the sealed chamber 11. The surface of the base metal material 1 is irradiated with an electron beam 4. The conditions of electron ray irradiation are specified similar to Example 28.

The surface of the base metal material 1 is scanned with the electron beam 4 in parallel so that the entire scanning area of the base metal material 1 is uniformly irradiated with electron rays. Thus, a tableting surface layer is formed on the surface of the base metal material 1. The tableting surface layer is formed of an alloy formed from titanium and magnesium, and has excellent wear resistance. In this tableting surface layer, magnesium and titanium form an alloy together, and are tightly combined. Accordingly, this tableting surface layer has extremely excellent wear resistance.

Also, in this method, in the case where the aforementioned provisional filming and beam irradiation processes are repeated a plurality of times, a thick tableting surface layer can be formed on the surface of the base metal material 1. The thick tableting surface layer is formed of magnesium stearate that forms an alloy together with titanium of the base metal material, and tightly combines with titanium of the base metal material.

### EXAMPLE 35

A base metal material is subjected to a surface treatment similar to Example 34 except that the tableting surface layer formed by the surface treatment according to Example 34 is polished to optimum smoothness by a polishing process similar to Example 29. Irradiation marks due to energy beam on the tableting surface layer are smoothed in the polishing process. Thus, Ra of the polished tableting surface layer is 0.25 µm. The friction coefficient of its surface is 0.3. This value is very small, and is close to the value 0.2 of DLC. It is said that DLC. has the smallest friction coefficient.

### EXAMPLE 36

After the tableting surface layer is subjected to shot blasting and polished to be smoothed, the tableting surface is additionally subjected to shot peening for peer-like-surface finish. In the shot peening for peer-like-surface finish, silicon carbide grains with a mean diameter of 20 µm are discharged by air pressurized at 1.2 MPa.

### EXAMPLE 37

Punches and dies subjected to the surface treatment according to Examples 14 to 36 are set to an 18-pair rotary type tableting apparatus to form the aforementioned medicine of the following formula without any lubricants at all into a tablet by using a direct dry-tabletting method. After 2000 tablets are formed, the medicine is not adhered on the punches, and the tablets are finely formed.

### [Composition of Medicine]

| | |
|---|---|
| Ibuprofen | 50% by weight |
| Hydroxypropyl Starch | 30% by weight |
| Synthetic Aluminum Silicate | 10 % of the weight |
| Microcrystalline cellulose | 10% by weight |

The thus-formed tablets are fast disintegrating tablets that disintegrate in oral cavity within 30 seconds.

### Industrial Applicability

The present invention provides tableting surface treatment of a punch or die with extremely excellent durability and releasability that cannot be provided solely by a base metal material or by other surface treatment such as plating. A punch or die provided by the tableting surface treatment according to the present invention can be used in ideal conditions. In particular, tablets can be formed that have formula without stearic acid nor magnesium stearate.

### Brief Description of Drawings

[Fig. 1] Partially enlarged cross-sectional view of a tableting punch or die according an embodiment of the present invention.
[Fig. 2] Schematic view of a provisional filming process of a tableting surface treatment method of a tableting punch or die according an embodiment of the present invention.
[Fig. 3] Schematic view of a provisional filming process of a tableting surface treatment method of a tableting punch or die according another embodiment of the present invention.
[Fig. 4] Schematic view of a provisional filming process of a tableting surface treatment method of a tableting punch or die according another embodiment of the present invention.
[Fig. 5] Schematic view of a provisional filming process of a tableting surface treatment method of a tableting punch or die according another embodiment of the present invention.
[Fig. 6] Schematic view of a provisional filming process of a tableting surface treatment method of a tableting punch or die according another embodiment of the present invention.
[Fig. 7] Schematic view of a provisional filming process of a tableting surface treatment method of a tableting punch or die according another embodiment of the present invention.
[Fig. 8] Schematic view of a provisional filming process of a tableting surface treatment method of a tableting punch or die according another embodiment of the present invention.
[Fig. 9] Schematic view of a beam irradiation process of a tableting surface treatment method of a tableting punch or die according an embodiment of the present invention.
[Fig. 10] Schematic view of a tableting surface treatment method of a tableting punch or die according an embodiment of the present invention.
[Fig. 11] Schematic view of a tableting surface treatment method of a tableting punch or die according another embodiment of the present invention.
[Fig. 12] Schematic view of a tableting surface treatment method of a tableting punch or die according another embodiment of the present invention.
[Fig. 13] Schematic view of a tableting surface treatment method of a tableting punch or die according another embodiment of the present invention.
[Fig. 14] Schematic view of a tableting surface treatment method of a tableting punch or die according another embodiment of the present invention.
[Fig. 15] Schematic perspective view showing an exemplary ball-on-disk abrasion test.
[Fig. 16] Enlarged cross-sectional view showing exemplary formation of different type metal film on a base metal material by a conventional treatment method.

### Explanation of Reference Letters or Numerals

1 ... Base Metal Material
2 ... Different Type Metal Grain
3 ... Different Type Metal Film
4 ... Electron Beam
5 ... Tableting Surface Layer
6 ... Binder
7 ... Nozzle
8 ... Electrically Conductive Vessel
9 ... Metal Vapor
10 ... Electron Irradiation Apparatus
11 ... Sealed Chamber
12 ... Electron Gun
13 ... Focusing Coil
14 ... Defection Coil
15 ... Cathode
16 ... Bias Electrode
17 ... Anode
18 ... Heater
19 ... Power Supply
31 ... Punch
31A ... Upper punch
31B ... Lower punch
32 ... Die
33 ... Die Bore
34 ... Tableting Surface
40 ... Vacuum Deposition Apparatus
41 ... Vacuum Chamber
42 ... Vacuum Pump
43 ... Crucible
90 ... Aggregating Particle Group
91 ... Base Metal Material
92 ... Powdery Metal Particle
93 ... Different Type Metal Film
96 ... Binder

## Claims

1. A method for tableting surface treatment of a tableting punch or die comprising:
a provisional filming step that subjects a tableting surface of a base metal material (1) to shot peening using different type metal grains (2) made of a different type of metal from the base metal material (1) so that a different type metal film (3) is formed on the tableting surface of the base metal material (1); and
a beam irradiation step that, after the different type metal film (3) is formed in the provisional filming step, irradiates the tableting surface of the base metal material (1) with an electron beam (4) or laser beam as energy beam so that the different type metal film (3) and the base metal material (1) are combined to form a tableting surface layer (5).

2. A method for tableting surface treatment of a tableting punch or die comprising:
a provisional filming step that subjects a tableting surface of a base metal material (1) to shot peening using different type metal grains (2) made of a different type of metal from the base metal material (1) so that a different type metal film (3) is formed on the tableting surface of the base metal material (1); and
a beam irradiation step that, after the different type metal film (3) is formed in the provisional filming step, irradiates the tableting surface of the base metal material (1) with an electron beam (4) or laser beam as energy beam so that the different type metal film (3) and the base metal material (1) are combined to form a tableting surface layer (5), wherein
said different type metal grains (2) are formed of any of sodium fluoride, sodium sulfide, sodium carbide, sodium boride, potassium fluoride, potassium sulfide, potassium carbide, potassium boride, and magnesium stearate.

3. A method for tableting surface treatment of a tableting punch or die comprising:
a provisional filming step that provides a tableting surface of a base metal material (1) with different type metal grains (2) made of a different type of metal from the base metal material (1), the different type metal grains (2) being adhered on the tableting surface of the base metal material (1) by a binder (6) that can be removed by energy of an energy beam whereby forming a different type metal film (3) on the tableting surface of the base metal material (1); and
a beam irradiation step that, after the different type metal film (3) is formed in the provisional filming step, irradiates the tableting surface of the base metal material (1) with an electron beam (4) or laser beam as energy beam to remove the binder (6) so that the different type metal film (3) and the base metal material (1) are combined to form a tableting surface layer (5).

4. A method for tableting surface treatment of a tableting punch or die comprising:
a provisional filming step that provides a tableting surface of a base metal material (1) with different type metal grains (2) made of a different type of metal from the base metal material (1), the different type metal grains (2) being adhered on the tableting surface of the base metal material (1) by a binder (6) that can be removed by energy of an energy beam whereby forming a different type metal film (3) on the tableting surface of the base metal material (1); and
a beam irradiation step that, after the different type metal film (3) is formed in the provisional filming step, irradiates the tableting surface of the base metal material (1) with an electron beam (4) or laser beam as energy beam to remove the binder (6) so that the different type metal film (3) and the base metal material (1) are combined to form a tableting surface layer (5), wherein
said different type metal grains (2) are formed of any of sodium fluoride, sodium sulfide, sodium carbide, sodium boride, potassium fluoride, potassium sulfide, potassium carbide, potassium boride, and magnesium stearate.

5. A method for tableting surface treatment of a tableting punch or die comprising:
a provisional filming step that provides a tableting surface of a base metal material (1) with a different type metal film (3) made of a different type metal of a metal different from the base metal material (1), the different type metal film (3) being adhered on the tableting surface of the base metal material (1) by vacuum deposition; and
a beam irradiation step that, after the different type metal film (3) is formed in the provisional filming step, irradiates the tableting surface of the base metal material (1) with an electron beam (4) or laser beam as energy beam so that the different type metal film (3) and the base metal material (1) are combined to form a tableting surface layer (5).

6. A method for tableting surface treatment of a tableting punch or die according to Claim 5, wherein in said provisional filming step, different type metal grains (2) are irradiated with an energy beam to heat the different type metal grains (2) so as to produce metal vapor (9) containing a plurality of different types of metals so that the metal vapor (9) is adhered on the surface of the base metal material (1), wherein the different type metal grains (2) are made from powder of the plurality of different types of metals.

7. A method for tableting surface treatment of a tableting punch or die according to Claim 3 or 4, wherein in said provisional filming step, the different type metal grains (2) are driven and adhered onto the tableting surface of the base metal material (1).

8. A method for tableting surface treatment of a tableting punch or die according to any of Claims 1 to 4, wherein in said provisional filming process, the different type metal film (3) is formed from a plurality of types of different type metal grains (2) made of different types of metals.

9. A method for tableting surface treatment of a tableting punch or die according to Claim 5, wherein in said provisional filming process, the different type metal film (3) is formed from a plurality of types of different type metal materials made of different types of metals.

10. A method for tableting surface treatment of a tableting punch or die according to any of Claims 1 to 4, wherein in said provisional filming step, the metal grains have different means particle diameters, and are discharged onto the surface of the base metal material (1).

11. A method for tableting surface treatment of a tableting punch or die according to Claim 1 or 3, wherein the different type metal grains (2) used in said provisional filming step contain at least one of W, C, B, Ti, Ni, Cr, Si, Mo, Ag, Au, Ba, Be, Ca, Co, Cu, Fe, Mg, Mn, Nb, Pt, Ta, V, F and S, and fluoride, sulfide, nitride, carbide and boride of these metals.

12. A method for tableting surface treatment of a tableting punch or die according to Claim 1 or 3, wherein the different type metal grains (2) used in said provisional filming step contains any of molybdenum disulfide, tungsten sulfide, and boron nitride.

13. A method for tableting surface treatment of a tableting punch or die according to Claim 1 or 3, wherein the different type metal grains (2) used in the provisional filming step are compounds containing an alloy of a plurality of metals, and a metal.

14. A method for tableting surface treatment of a tableting punch or die according to Claim 1 or 3, wherein the different type metal grains (2) used in the provisional filming step have a mean particle diameter of not less than 0.03 µm.

15. A method for tableting surface treatment of a tableting punch or die according to any of Claims 1 to 4, wherein the different type metal grains (2) used in the provisional filming step have a mean particle diameter of not more than 500 µm.

16. A method for tableting surface treatment of a tableting punch or die according to Claim 5, wherein the different type metal used in said provisional filming step contains at least one of Na, K, W, C, B, Ti, Ni, Cr, Si, Mo, Ag, Au, Ba, Be, Ca, Co, Cu, Fe, Mg, Mn, Nb, Pt, Ta, V, F, S, and metal fluoride, metal sulfide, metal nitride, metal carbide and metal boride.

17. A method for tableting surface treatment of a tableting punch or die according to Claim 5, wherein the different type metal used in said provisional filming step contains molybdenum disulfide, tungsten sulfide, boron nitride, magnesium stearate, sodium fluoride, sodium sulfide, sodium carbide, sodium boride, potassium fluoride, potassium sulfide, potassium carbide, and potassium boride.

18. A method for tableting surface treatment of a tableting punch or die according to Claim 5, wherein the different type metal used in said provisional filming step is compounds containing an alloy of a plurality of types of metal, and a metal.

19. A method for tableting surface treatment of a tableting punch or die according to Claim 6, wherein the different type metal grains (2) used in said provisional filming step have a mean particle diameter of 1 µm to 3 mm.

20. A method for tableting surface treatment of a tableting punch or die according to any of Claims 1 to 5, wherein the base metal material (1) is formed of any of Fe, Al, Cu, steel alloy, aluminum alloy, copper alloy, metal containing Ag, Au, Ba, Ca, Co, Mg, Mn, Ni, Nb, Pt, Ta, Ti and V, silver alloy, gold alloy, calcium alloy, cobalt alloy, chromium alloy, magnesium alloy, manganese alloy, nickel alloy, niobium alloy, tantalum alloy, titanium alloy, vanadium alloy, sintered metal, F and S, and fluoride, sulfide, nitride, carbide, and boride of these metals.

21. A method for tableting surface treatment of a tableting punch or die according to any of Claims 1 to 5, wherein in said beam irradiation step, after the different type metal film (3) is formed on the base metal material (1), the base metal material (1) is irradiated with the energy beam in a vacuum or in a gas atmosphere.

22. A method for tableting surface treatment of a tableting punch or die according to any of Claims 1 to 5 further comprising a polishing step that polishes the surface of the tableting surface layer (5) formed in said beam irradiation step.

23. A method for tableting surface treatment of a tableting punch or die according to Claim 22, wherein in said polishing step, said tableting surface layer (5) is subjected to shot blasting using polishing powder.

24. A method for tableting surface treatment of a tableting punch or die according to Claim 22, wherein the surface of the tableting surface layer (5) polished in said polishing step is subjected to shot peening for peer-like-surface finish.

25. A method for tableting surface treatment of a tableting punch or die according to Claim 3 or 4, wherein in said provisional filming step, the different type metal grains (2) are driven by the energy of pressurized fluid, electric field and/or magnetic field.

26. A method for tableting surface treatment of a tableting punch or die according to Claim 3 or 4, wherein in said provisional filming step, a water soluble or organic solvent soluble binder is used as the binder (6) that adheres the different type metal grains (2).

27. A method for tableting surface treatment of a tableting punch or die according to Claim 3 or 4, wherein in said provisional filming step, oil is used as the binder (6) that adheres the different type metal grains (2) on the base metal material (1).

28. A method for tableting surface treatment of a tableting punch or die according to Claim 3 or 4, wherein in said provisional filming step, a sugar or cellulose group material is used as the binder (6) that adheres the different type metal grains (2) on the base metal material (1).

29. A method for tableting surface treatment of a tableting punch or die according to Claim 3 or 4, wherein in said provisional filming step, the binder (6) that adheres the different type metal grains (2) on the base metal material (1) is one material or a mixture of a plurality of materials selected from the group consisting of:
a material such as gum Arabic, tragacanth, gum karaya, caramel, starch, soluble starch, dextrin, α-starch, sodium alginate, gelatin, locust bean gum and casein;
a semi-synthetic material formed from a natural product, the material being any of lignosulfonate, carboxymethyl cellulose sodium salt, methyl cellulose, hydroxyethyl cellulose, sodium salt of carboxymethylated starch, hydroxy-ethylated starch, sodium salt of starch phosphate, hydroxypropyl cellulose, hydroxypropyl methyl cellulose, ethyl cellulose, acetyl cellulose, and ester gum; and
a composite formed from any of polyvinyl alcohol, polyvinyl methyl ether, polyacrylamide, sodium salt of polyacrylic acid, water-soluble copolymer, copolymer of partially saponificated vinyl acetate and vinyl ether, acrylic acid, methacrylic acid, maleic acid and polymer or copolymer of maleic acid ester or salt, polyethylene glycol, polyethylene oxide, polyvinyl pyrrolidone, vinylpyrrolidone-vinyl acetate copolymer, polyvinyl acetate, coumarone resin, petroleum resin, and phenolic resin.

30. A method for tableting surface treatment of a tableting punch or die according to Claim 3 or 4, wherein in said provisional filming step, an irradiation-setting resin capable of being cured by ultraviolet irradiation is used as the binder (6) that adheres the different type metal grains (2) on the base metal material (1).

31. A method for tableting surface treatment of a tableting punch or die according to Claim 3 or 4, wherein in said provisional filming step, after the binder (6) is applied on the surface of the base metal material (1), the different type metal grains (2) are driven to collide with the surface of the base metal material (1) with the binder (6) applied thereon whereby forming the different type metal film (3).

32. A method for tableting surface treatment of a tableting punch or die according to Claim 3 or 4, wherein in said provisional filming step, the different type metal grains (2) are driven to collide with the surface of the base metal material (1), and both of the binder (6) and the different type metal grains (2) are driven toward the surface of the base metal material (1) whereby forming the different type metal film (3).

33. A method for tableting surface treatment of a tableting punch or die according to Claim 3 or 4, wherein the binder (6) is a powdery material, wherein in said provisional filming step, the powdery binder (6) and the different type metal grains (2) are adhered on the surface of the base metal material (1) by electrostatic force, and are then heated so that the different type metal grains (2) are coupled to the surface of the base metal material (1) by the medium of the binder (6) whereby forming the different type metal film (3).

34. A method for tableting surface treatment of a tableting punch or die according to Claim 3 or 4, wherein in said provisional filming step, a coating agent is sprayed onto the surface of the different type metal film (3).

35. A tableting punch or die comprising:
a base metal material (1), and
a tableting surface layer (5) that is formed by combining a different type metal film (3) and the base metal material (1) by irradiation with an electron beam (4) or laser beam as energy beam, wherein a tableting surface of the base metal material (1) is subjected to shot peening using different type metal grains (2) made of a different type of metal from the base metal material (1) so that the different type metal film (3) is formed.

36. A tableting punch or die comprising
a base metal material (1), and
a tableting surface layer (5) that is formed by combining a different type metal film (3) and the base metal material (1) by irradiation with an electron beam (4) or laser beam as energy beam, wherein a tableting surface of the base metal material (1) is subjected to shot peening using different type metal grains (2) made of a different type of metal from the base metal material (1) so that the different type metal film (3) is formed, wherein the different type of metal from the base metal material (1) contains any of sodium fluoride, sodium sulfide, sodium carbide, sodium boride, potassium fluoride, potassium sulfide, potassium carbide, potassium boride, and magnesium stearate.

37. A tableting punch or die comprising:
a base metal material (1), and
a tableting surface layer (5) that is formed by combining a different type metal film (3) and the base metal material (1) by irradiation with an electron beam (4) or laser beam as energy beam, wherein different type metal grains (2) are made of a different type of metal from the base metal material (1) and are adhered on a tableting surface of the base metal material (1) by a binder (6) that is removed by energy of the energy beam in the irradiation with the energy beam so that the different type metal film (3) is formed on the tableting surface of the base metal material (1).

38. A tableting punch or die comprising:
a base metal material (1), and
a tableting surface layer (5) that is formed by combining a different type metal film (3) and the base metal material (1) by irradiation with an electron beam (4) or laser beam as energy beam, wherein different type metal grains (2) are made of a different type of metal from the base metal material (1) and are adhered on a tableting surface of the base metal material (1) by a binder (6) that is removed by energy of an energy beam in the irradiation with the energy beam so that the different type metal film (3) is formed on the tableting surface of the base metal material (1), wherein the different metal grains (2) contain any of sodium fluoride, sodium sulfide, sodium carbide, sodium boride, potassium fluoride, potassium sulfide, potassium carbide, potassium boride, and magnesium stearate as the different type of metal from the base metal material (1).

39. A tableting punch or die comprising:
a base metal material (1), and
a tableting surface layer (5) that is formed by combining a different type metal film (3) and the base metal material (1) by irradiation with an electron beam (4) or laser beam as energy beam, wherein the different type metal film (3) is made of a different type metal of a metal different from the base metal material (1) and is formed on the tableting surface of the base metal material (1) by vacuum deposition.

40. The tableting punch or die according to any of Claims 35 to 39, wherein the friction coefficient of said tableting surface layer (5) is not more than 0.5.

41. The tableting punch or die according to any of Claims 35 to 39, wherein the arithmetic mean roughness Ra of the surface of said tableting surface layer (5) is not less than 0.1 µm and not more than 5 µm.

42. A tablet formed by using the tableting punch or die according to any of Claims 35 to 41.

43. The tablet according to Claim 42, wherein the content of lubricant is not more than 0.2 % by weight.

44. The tablet according to Claim 42, wherein the tablet contains no lubricant.

45. The tablet according to Claim 42, the tablet is any of fast disintegrating tablet, oral disintegrating tablet, and vaginal disintegrating tablet.

46. The tablet according to Claim 42, said tablet is any of medicine, health food, candy, and quasi drug.
